# EUROPEAN PATENT APPLICATION

(11) **EP 4 556 896 A1**
(43) Date of publication of application: **21.05.2025**
(21) Application number: 24211215.9
(22) Date of filing: 06.11.2024
(51) Int. Cl.: G01N 21/89, B65H 63/06, G01N 21/88

(54) **ILLUMINATION RECEIVING SYSTEM AND METHOD FOR MEASURING**

(30) Priority: 16.11.2023 LU 505551
(71) Applicant: Saurer Intelligent Technology AG, 9320 Arbon (CH)
(72) Inventor: Dumoulin, Charles Leopold Elisabeth, 9436 Balgach (CH)
(74) Representative: Morgenthum-Neurode, Mirko

(57) **Abstract**

The invention relates to an illumination receiving system for receiving a shadow projection from an object or a light reflected from such the object in a textile machine. To reduce the resource costs, to improve the system capabilities and to render the system more inert to disturbances it is provided that the illumination receiving system comprises:
- at least one receiving cavity; and
- at least one photosensitive electronical component;
wherein the receiving cavity is configured and placed relative to the object such that light emitted from a light source and projecting a shadow from the object and/or being reflected from the object to enter the receiving cavity and wherein the light entering the receiving cavity is transmitted to the at least one photosensitive electronical component for measuring the incoming illumination.

## Description

The invention refers to an illumination receiving system. The invention refers to a clearer. The invention also refers to a textile machine. The invention refers to a method of manufacturing. The invention refers to a method for measuring.

Clearer are known in the art e.g., from EP 1 655 599 B1. Therein, a clearer comprises a yarn sensor for optically scanning a yarn moving longitudinally in a measuring gap supplied with light rays from a source with a first receiver for directly transmitted light, two further receivers for light reflected from the yarn and elements for transmitting light between the source, gap and receivers. The transmitting element between the source and gap includes a diffusing foil, an aperture, and a lens behind the source in the radiation direction, such that the aperture is imaged at infinity. The transmitting elements between the gap and reflected light receivers each contain a lens before the receiver in the radiation direction, such that an image discernable by each receiver lies, in the absence of yarn on the opposite wall of the measurement gap, such that each image of the reflected light receivers lies crosswise on the other side and outside of the image of the source on the wall.

The clearer in the art provides a complex and difficult to handle optical setup in combination with a complex housing which limits the potential of the clearer with respect to the optical setup capabilities. Furthermore, the clearer in the art is complex in assemblance and therefore tedious to assemble, which binds resources in doing so.

Thus, it is the object of the invention to reduce the resource costs, to improve the system capabilities and to render the system more inert to disturbances.

The object is solved by an illumination receiving system with the features of claim 1. Further, the object is solved by a clearer with the features of claim 11. The object is solved by a textile machine with the features of claim 11. The object is solved by a method of manufacturing an illumination receiving system with the features of claim 12. The object is solved by a method for measuring with the features of claim 17.

Advantageous embodiments of the invention are the subject of the dependent claims, the description and the figures. Features, feature combinations, technical effects and advantages described in connection with the illumination receiving system, the textile machine and/or the clearer also apply to the method of assembling an illumination receiving system as well as to a method for measuring. This also applies the other way around, so that with regard to the disclosure of the individual aspects of the invention, reciprocal reference is or can always be made, particularly independent of the category described and/or claimed.

According to an aspect of the invention, the object is solved by a housing with the features of claim 1.

Therein, an illumination receiving system may be configured for receiving a shadow projection from an object or may be configured for receiving reflected light from an object, particularly in a textile machine. The illumination receiving system may comprise at least one receiving cavity. The illumination receiving system may comprise at least one photo sensitive electronical component. The receiving cavity is particularly configured and placed relative to an object such that light emitted from a light source and projecting a shadow from the object to enter the receiving cavity. Alternatively or additionally, the receiving cavity is particularly configured and placed relative to an object such that light being reflected from the object to enter the receiving cavity. Therein, the light entering the receiving cavity is particularly transmitted to the at least one photo sensitive electronical component for measuring the incoming illumination. The proposed illumination receiving system may foresee multiple non-specular reflections of the incoming illumination in the measurement cavity. The multiple non-specular reflections of the incoming illumination may result in an even illumination of the whole cavity surface. The structure or image of the projection can thus be destroyed. The measurement can be an integral measurement of all the light captured through the aperture of the receiving system. By this means, the complete optical setup may not require a separate and individual diffusing sheet e.g., a diffusor. Moreover, the task of measuring the characteristics of the object between an illumination projector and the illumination receiving system may be reduced to measurements of the illumination strength of the cavity surface. By this means, the opening aperture of the receiving system and the size of the photo sensitive electronical component can be decoupled. The cross section of the opening aperture of the illumination receiving system can be varied independently with respect to the size of the photo sensitive electronical component and vice versa. Furthermore, the setup is simple to handle and therefore reduces the necessary maintenance, set up and handling resources.

The object may particularly be at least one of a string-like textile formation, a yarn, a sliver, a rover or a singular item, particularly placed inside a measurement gap of a sensor, particularly in a textile machine.

A photosensitive electronical component may be any type of photosensitive detector or part thereof interacting with the incoming (the received) light. The photosensitive electronical component may be a photodiode e.g., a GaAs material configured to detect light and transforming the incoming light into an electronical signal.

The light source may be positioned relative to a measurement gap, wherein a yarn can be guided. The guiding of a yarn can be implemented such that the yarn passes relative to an illumination spot, an illumination area and/or an illumination volume. In this illumination spot, illumination area and/or illumination volume the yarn may interact with the light emitted from a light source to project a shadow or to reflect light from the yarn to the illumination receiving system. Alternatively or additionally, the yarn, its parts or components thereof may interact with the light and may cause scattering and/or may absorb light of certain wavelengths. All these interactions may be indicative of yarn characteristics, such as impurities, defects, fiber damages etc. In particular, the yarn is guided between two points where it interacts with a yarn guiding device as described elsewhere herein.

Light yarn interaction allows to optically detect characteristics of the yarn, particularly defects or impurities in the yarn, as described above. To do that, a light source is configured to transmit light via optics to a certain illumination spot, illumination area and/or illumination volume as described elsewhere herein. Additionally, the illumination receiving system may function as a receiver and may comprise optics to transfer light from the illumination spot, the illumination area and/or the illumination volume to a photosensitive detector system (also referred to as photosensitive electronic component). In total, the combination of light source, photosensitive detector (as an embodiment or synonym of a photosensitive electronical component) and the optics in at least one beam path there between may be referred to as an optical setup.

The light source might be any type of light source emitting light that is capable of performing the respective tasks as described in detail elsewhere herein. A light source might be a light emitting diode, or in short, an LED, a laser diode, a continuous wave laser, a pulsed laser, etc.

A receiving cavity is particularly configured to receive light projecting a shadow from a yarn into the receiving cavity. Therefore, the shadow may indicate differences on sectional parts of the yarn moving by in the measuring gap. The yarn is moving by particularly because it is made in a spinning device of a textile machine and thereafter it can be checked for the resulting quality. This might be one exemplary application of the respective illumination receiving system, particularly in a clearer of a textile machine as described elsewhere herein.

According to an aspect, the photosensitive electronical component is mounted in a position such that the photosensitive electronical component is out of line-of-sight of the incoming light projecting a shadow from the object and/or reflecting light from the object into the receiving cavity. This allows to reduce the number of components for the illumination receiving system. The photosensitive electrical component has particularly no direct line of sight to the illumination projector as a type of projection system. Without direct line of sight of the photosensitive electrical components, no diffusor may be required. Furthermore, to reduce the assembly overhead, the photosensitive electrical component can be placed in plane to the signal processing PCBA. Placing all the receiving photosensitive electrical components on the same PCB (forming a PCBA this way) as the signal processing components and may be together with the electronics configured for the illumination projection, the required electronics can be assembled in a cost conserving single part with a single manufacturing pass of method steps.

A PCBA, short for printed circuit board assembly, particularly refers to the combination of a PCB, short for a printed circuit board, and components and electronic accessories. The PCBA can be placed such that it comprises at least one of the light source or the photosensitive detector. The light source may be a light emitting diode, short LED. The photosensitive detector may be a photodiode that can sense light for transforming it into an electronic signal. At least one of the light source or the photosensitive detector may be placed in plane with the PCB. The combination of a PCB with at least one of photosensitive detector or light source may render it to a PCBA. In embodiments there might be additional electronic components attached to the PCBA. The PCBA may comprise at least one alignment structure that is configured and positioned to allow for an alignment of the PCBA with respect to other optical components described elsewhere herein to assemble an optical setup by placing the PCB onto the respective optical components, particularly assembling the illumination receiving system.

The light source, the photosensitive electrical component (as part of the photosensitive detector) and any optics there between may be referred to as optical setup.

Placed at such a mounting position inside the receiving cavity (potentially being a lighthouse as described elsewhere herein) without direct line of sight of the incoming light bundle, the photosensitive electronical component can measure the brightness of the entrapped incoming illumination by the receiving cavity (the lighthouse). This can represent an indirect measurement. Due to this indirect measurement, the size of the photosensitive electronical component may not be coupled or may be independent of the size of the object to be measured. This allows for a selection of the most suitable photosensitive electronical component, particular with criteria being one or a combination of response time, sensitivity, wavelength range, sensitivity over wavelength, Noise Equivalent Power, active size, packaging type, cost, etc. This selection criteria can be much wider compared to known solutions in the art and may allow for optimization, where the first criteria to be met may be the maximum defect size that is to be measured.

According to an aspect, an aperture can be placed at the entrance of the receiving cavity. This allows to block out unwanted environmental light.

A thin aperture may allow light from all angles of the opening hemisphere to go through the aperture opening. A thin aperture has no angular blocking. A thick aperture on the contrary provides an angular blocking of incoming (received) rays of light (also to be referred to as light beams).

The aperture may be attached to the receiving cavity, particularly the lighthouse, directly. Such a direct attachment of the receiving cavity, particularly a lighthouse, to the aperture is particularly not used in combination with a thin aperture. In these embodiments for effective suppression of environmental light, the aperture may need to reduce the opening angle over which light is to enter into the lighthouse. In direct attachment embodiments, the (receiving) aperture may be a thick aperture. The (receiving) aperture in form of a thick aperture reduces the opening angle of the receiving cavity, particularly a lighthouse, over which light can be received. The exact calculation of the opening dimensions of the receiving cavity, particularly a lighthouse, can take the opening angle of the aperture and the nominal distance of the yarn to the aperture into account.

Alternatively or additionally, the receiving cavity can be a lighthouse. The exemplary embodiment comprises a lighthouse as a receiving cavity in which all the light transmitted into it, is integrated by multiple reflections. The photosensitive electronical component can be mounted to the side of the lighthouse at a position where there is no direct line of sight to the incoming illumination entrapped by the lighthouse. This allows the photosensitive electronical component to be placed in plane of the signal processing PCBA without having a direct line of sight to the incoming illumination. Moreover, the lighthouse does not need to be pre-assembled to a PCBA, particularly a single PCBA. This can be done at a later stage in an assembly process (method of assembly) as described elsewhere in detail herein. This allows the lighthouse to be placed e.g., into a housing first before linking the PCBA and the respective photosensitive electronical component. This allows for an optimized optical design with short optical path length at the illumination receiving system as the receiver and simultaneously allows a housing design to be optimized for ease of assemblance.

According to an aspect, at least the width of an aperture opening can be set to a range of a minimum length of the defect size that is to be measured. Alternatively or additionally at least the height of the aperture can be set to a range of a maximum defect size that is to be measured. This allows to define the respective cutoff for measured signals based on an optical device, here the aperture. This is easy to control and to adapt.

According to an aspect the aperture can be a thick aperture. This allows blocking of certain angular components of otherwise received and detected rays of light. This allows to block certain type of stray light or to suppress external light sources that do not form part of the optical setup. All this allows to increase the signal to noise ratio. Therefore, even smaller signals may be detected.

According to an aspect, opposite walls of the receiving cavity can be at least one chosen from diffused, non-specular, shaped such that they direct light away from the aperture, or light absorbing in the wavelength range in which the at least one photo sensitive electronical component is sensitive. This allows to reduce the impact of light that might be scattered from the opposite walls of the receiving cavity. Therefore, these types of light beam are particularly suppressed and therefore do not further impact the measurement, or their impact may be reduced.

According to an aspect, an aperture of the receiving cavity can be (stray) light reducing in the wavelength range in which the at least one photosensitive electronical component is particularly sensitive by at least one of being non-specular, being absorptive or being shaped and/or being positioned such that it can direct light in a direction where potential secondary back-reflections into the aperture of the receiving cavity are particularly minimal; and/or shaped and/or positioned such that light impinging on its outer surface can be spread in multiple directions for minimizing potential secondary back-reflections into the aperture of the receiving cavity.

In an embodiment, an aperture of the receiving cavity can be light absorbing in the wavelength range in which the at least one photosensitive electronical component is sensitive. It may be alternatively or additionally non-specular, non-directive and/or shaped or positioned such that it directs light in a direction where potential secondary reflections back into the aperture of the receiving cavity are minimal and/or shaped or positioned such that it spreads light in multiple directions minimizing potential secondary reflections back into the aperture of the receiving cavity. This allows to reduce the impact of light that might be scattered from the aperture of the receiving cavity. Therefore, these types of light beam are particularly suppressed and therefore do not further impact the measurement, or their impact may be reduced.

According to an aspect a thin aperture with lens assembly may be placed in front of the entrance to the receiving cavity in an f-configuration, particularly mounted in an interconnecting tube, for a shadow projection, particularly in an f-configuration mounted in an interconnecting tube, for a shadow projection and providing a (simple) pin-hole at the entrance to the receiving cavity. This allows to further enhance the Signal to Noise ratio (S/N). A thin aperture with the desired sizes according to the defect to be measured can be in close proximity to a light gathering lens in z-direction of light propagation. The thin aperture together with the lens can be placed in a wall of the measurement gap, opposite to an illumination projector as described elsewhere herein. The focal length of the lens can be selected such that the focal length is half the width of the measurement gap. The collimated light from the illumination projector may impinge onto the aperture and may be focused by the lens on its focal point. Stray light originating from the yarn may impinge onto the aperture and can be converted to a parallel (collimated) beam of light by the lens. Stray light originating from the outer bounds of the illumination projector objects can pass the aperture and lens with the same angle as they were impinging. Stray light originating from the center of the projection objects may pass the aperture and may be focused by the lens at a distance of 2f. Providing a simple pin-hole at the entrance to the receiving cavity, particularly the lighthouse, at the position of the secondary focus point of the lens can remove most of the stray light projections e.g., originating from the opposite wall as well as from the yarn. The part holding the thin aperture with lens can be connected by a tube to the lighthouse, the so-called interconnecting tube.

According to an aspect, a thin aperture with lens assembly can be placed in front of the entrance to the receiving cavity in a greater than 2f configuration, particularly mounted in an interconnecting tube, for a reflection arrangement, particularly wherein the opening size of the aperture of the receiving cavity matches the opening size of the thin aperture. This allows to further enhance the Signal to Noise ratio (S/N). In the reflective arrangement the same type of thin aperture with lens combination can be used as with the shadow projection arrangement, but the entrance to the receiving cavity, particularly the lighthouse, can be positioned at a distance further than 2f from the lens. The entrance to the receiving cavity, particularly the lighthouse, can have the same opening as the thin aperture. In a particular embodiment, the distance between the receiving cavity, particularly the lighthouse, and the lens is at least 4f.

Light reflected off of the yarn after passing through the aperture can be converted by the lens to a beam of parallel light (collimated beam). This light beam is able to pass the entrance to the receiving cavity, particularly the lighthouse. Collimated light beams can be back-reflected from the opposite walls e.g., of the measurement gap. They can, after passing the aperture, be focused to the secondary focus point of the lens. Because of their steep angle, these rays can be incident with the inner surface of the wall of the interconnecting tube and can be absorbed by the interconnecting tube's inner surfaces between the lens and the receiving cavity, particularly the lighthouse. Stray light, particularly coming from the center of the opposite wall, can, after passing through the thin aperture, be focused by the lens at a distance 2f from the lens. Because of the focus angle, this light spot will increase to the size of the thin aperture at distance 4f from the lens.

According to an aspect, the at least one inner surface of the receiving cavity can comprise at least one of a non-specular surface finish which is preferably of a (highly-)reflective, non-directional material. This allows an integral measurement (corresponding to physically performing an integral calculation) of the received illumination. The material of the surface may contain particularly either of Barium Sulfate (BaSO₄) or Titanium Dioxide (TiOz) pigments as they exhibit the respective material characteristics.

According to an independent aspect, a clearer for a textile machine or a textile machine can comprise an illumination receiving system as described elsewhere herein. Features, feature combinations, technical effects and advantages described in connection with the illumination receiving system, the clearer and/or any of the methods described elsewhere herein also apply to the textile machine and/or the clearer, irrespective of the category (method, use, device and system) described or claimed. This also applies the other way around, so that with regard to the disclosure of the individual aspects of the invention, reciprocal reference is or can always be made, particularly independent of the category (method, use, device and system) described and/or claimed.

According to an independent aspect, a method of manufacturing an illumination receiving system, particularly as described elsewhere herein, can comprise the step of manufacturing a pre-receiving cavity. The method can comprise the step of applying a surface finish (i.e., machining, etching, coating, lining). This allows to establish a surface that exhibits the integrating properties of the receiving cavity as described with respect to the illumination receiving system. Features, feature combinations, technical effects and advantages described in connection with the illumination receiving system, the clearer and/or the textile machine described elsewhere herein also apply to any of the methods, irrespective of the category (method, use, device and system) described or claimed. This also applies the other way around, so that with regard to the disclosure of the individual aspects of the invention, reciprocal reference is or can always be made, particularly independent of the category (method, use, device and system) described and/or claimed.

According to an aspect, the method can comprise the step of manufacturing of the pre-receiving cavity to be in form of (direct) injection molding. Manufacturing of the receiving cavity, particularly the lighthouse, can be done by direct injection molding. Particularly no secondary processes like machining and/or coating and/or etching and/or lining of the inner surface of the receiving cavity, particularly the lighthouse, have to be performed. The light entrapped by the receiving cavity, particularly the lighthouse, can be measured following multiple non-specular reflections. The material choice of the receiving cavity, particularly the lighthouse, can therefore affect the efficiency of the resulting embodiment of an illumination receiving system, particular the receiving cavity. The non-specular surface requirement can be influenced by the surface finish of the molding tool.

According to an aspect, a pigment can be added to a base plastic compound. A resulting granulate can be used for (direct) injection molding. The right material allows for an inherently non-specular, non-directionally reflective surface that comprises a (highly) reflective surface finish (without directionality of the reflection). Furthermore, embedding the pigments in the material provides that these do not rub off from the material as they are inherently part of the material.. A material that is highly reflective and non-directional can be used to increase the illumination efficiency.

According to an aspect, the pigment added can be either Barium Sulfate (BaSOt) or Titanium Dioxide (TiOz). These pigments exhibit the properties of high reflectivity with non-directed reflectivity.

According to an aspect at least one of an aperture, an receiving cavity's part of a wall or an interconnecting tube can be coated and or be made such that it comprises an absorptive material, particularly comprising a carbon component. Therefore, the respective components absorb stray light instead of reflecting it themselves. Therefore, the signal to noise ration may further be increased.

According to an independent aspect, a method for measuring defects in a yarn can comprise the step of emitting light from a light source to a yarn such that the light projects a shadow from the object, particularly the yarn. Alternatively or additionally, the method for measuring defects in an object, particularly a yarn, can comprise the step of emitting light from a light source to an object, particularly a yarn, such that the light reflects off of the object, particularly the yarn. The method may comprise the step of collecting the light with the projected shadow or reflected from the yarn in a receiving cavity. The method may comprise the step of transmitting the light entering the receiving cavity to at least one photosensitive electronical component such that the incoming illumination is to be measured. Features, feature combinations, technical effects and advantages described in connection with the illumination receiving system, the clearer and/or the textile machine described elsewhere herein also apply to any of the methods, irrespective of the category (method, use, device and system) described or claimed. This also applies the other way around, so that with regard to the disclosure of the individual aspects of the invention, reciprocal reference is or can always be made, particularly independent of the category (method, use, device and system) described and/or claimed.

In the following, embodiments of the invention are described in more detail with reference to figures, showing schematically and exemplarily:
- Fig. 1: an embodiment of a clearer;
- Fig. 2: an embodiment of a housing of a clearer in exploded view;
- Fig. 3: an embodiment of a mirror holder;
- Fig. 4: a schematic diagram of an embodiment of an optical setup;
- Fig. 5: a schematic diagram of an embodiment of an optical setup;
- Fig. 6: a schematic diagram of an embodiment of an optical setup;
- Fig. 7: a schematic representation of an embodiment of an aperture with passing yarn;
- Fig. 8: a schematic ray diagram of an embodiment of an optical setup;
- Fig. 9: a schematic ray diagram of an embodiment of an optical setup;
- Fig. 10A: a top perspective view of an embodiment of a button;
- Fig. 10B: a top perspective view of an embodiment of a button with a seal;
- Fig. 10C: a bottom perspective view of an embodiment of a button with a seal;
- Fig. 10D: a partial cut view of an embodiment of a seal for a button;
- Fig. 10E: a button with seal placed at a housing;
- Fig. 11: a cut view through a plane parallel to the yarn propagation direction through a housing;
- Fig. 12A: a cut view through a first plane perpendicular to the yarn propagation direction through a housing showing a selected part thereof;
- Fig. 12B: a cut view through a second plane perpendicular to the yarn propagation direction through a housing showing a selected part thereof;
- Fig. 13A: a cut view through a first plane perpendicular to the yarn propagation direction through a housing shown in full, partially assembled;
- Fig. 13B: an embodiment of a window carrier with an embodiment of a lighthouse;
- Fig. 13C: an embodiment of a lighthouse; and
- Fig. 13D: a cut view through a first plane perpendicular to the yarn propagation direction through a housing shown in full, partially assembled with optical setup placed therein;

The same reference signs are used for elements and structures exhibiting the same effect and/or which are of the same type.

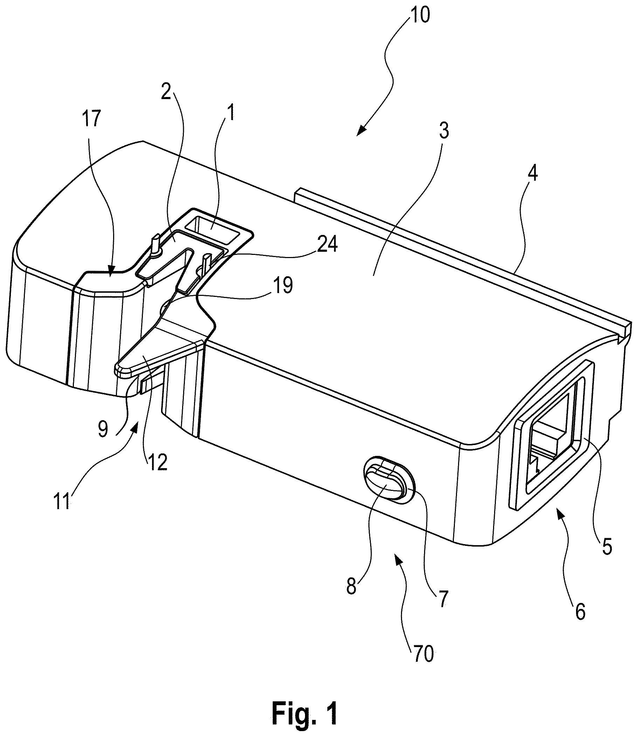

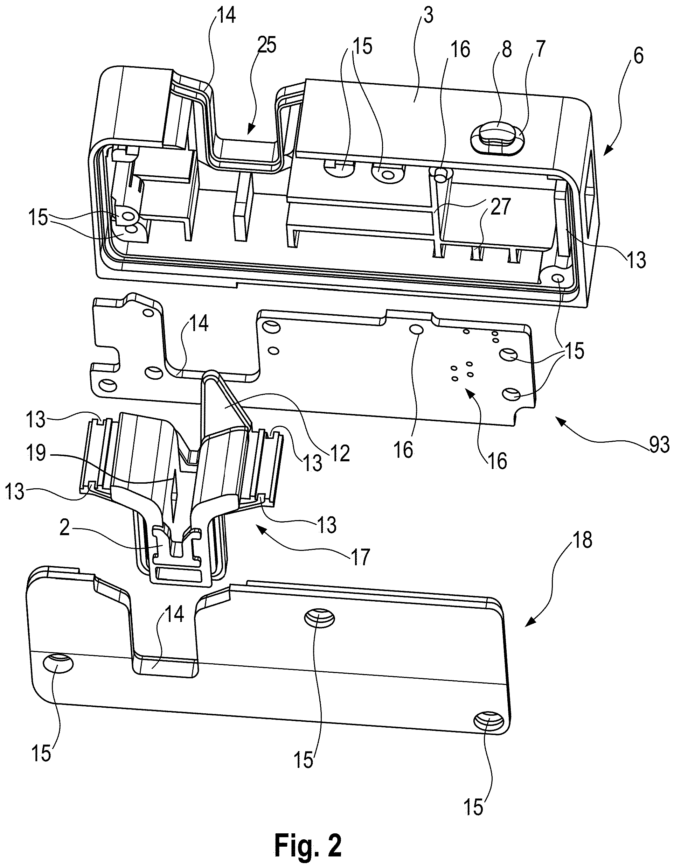

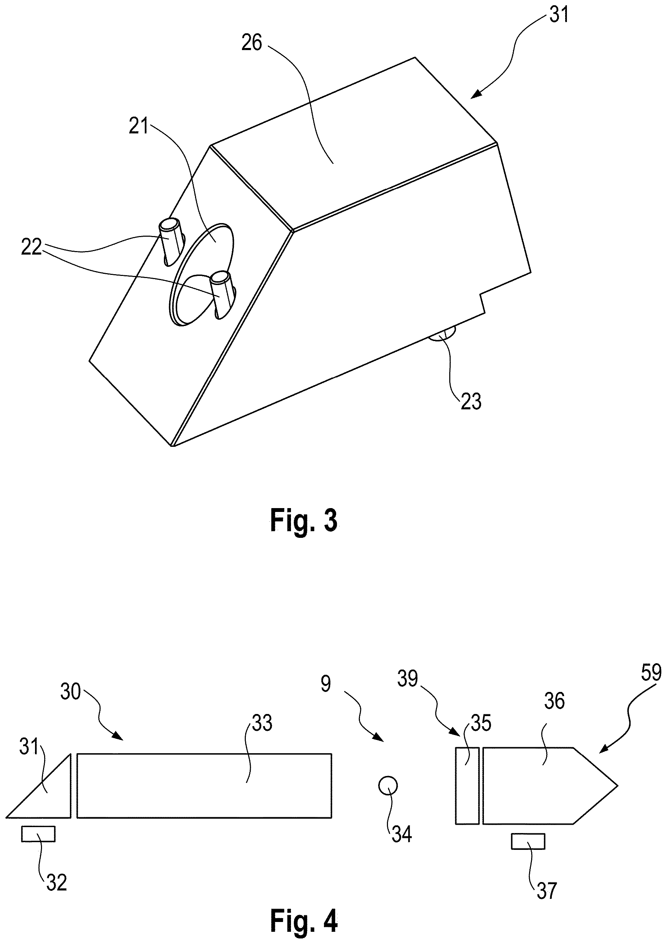

Fig. 1 shows an embodiment of a clearer 10, whose optical, mechanical and electrical components, their production process, the assembly processes as well as the service processes are addressed in the following. The clearer 10 can be used to measure the thickness of a yarn 34 (see Fig. 4). A through-light shadow-projection setup may be used in some embodiments. For correct measurements of the diameter of the yarn 34 an even, non-divergent illumination profile without any vignetting can be provided. The clearer 10 combines an illumination projector 30 with an illumination receiving system 39, both as described in detail for different embodiments with respect to Figs. 3 to 6. The clearer 10 provides a housing that is described in detail with respect to Fig. 2. The clearer 10 is configured to be placed in a textile machine and may be configured for guiding a yarn 34 to optically detect characteristics in the yarn 34. To do so, the clearer 10 may be placed after a yarn 34 was made in the textile machine and before the yarn 34 is transferred to a spindle for transportation or storage.

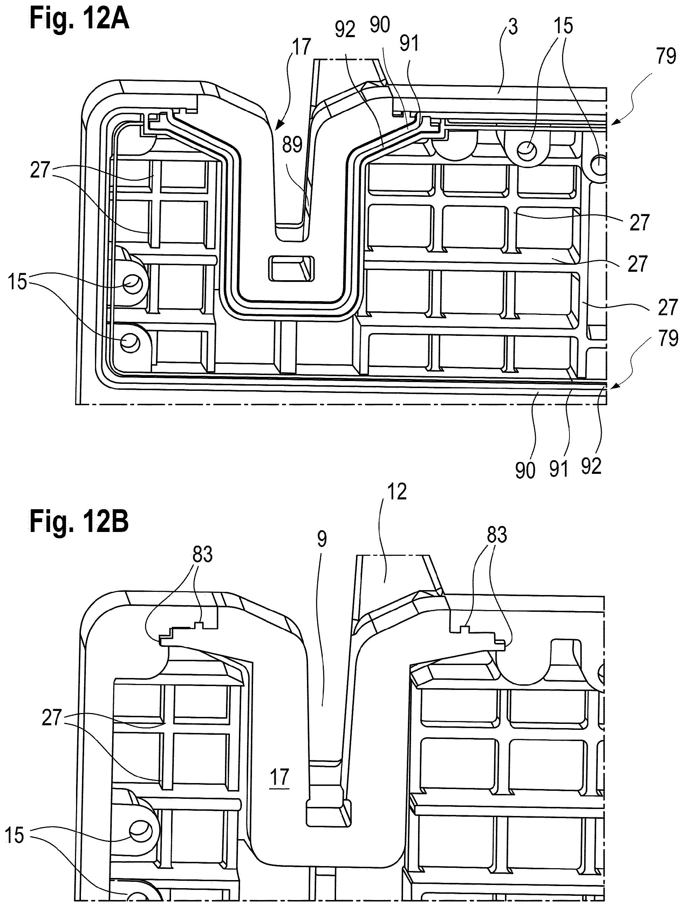

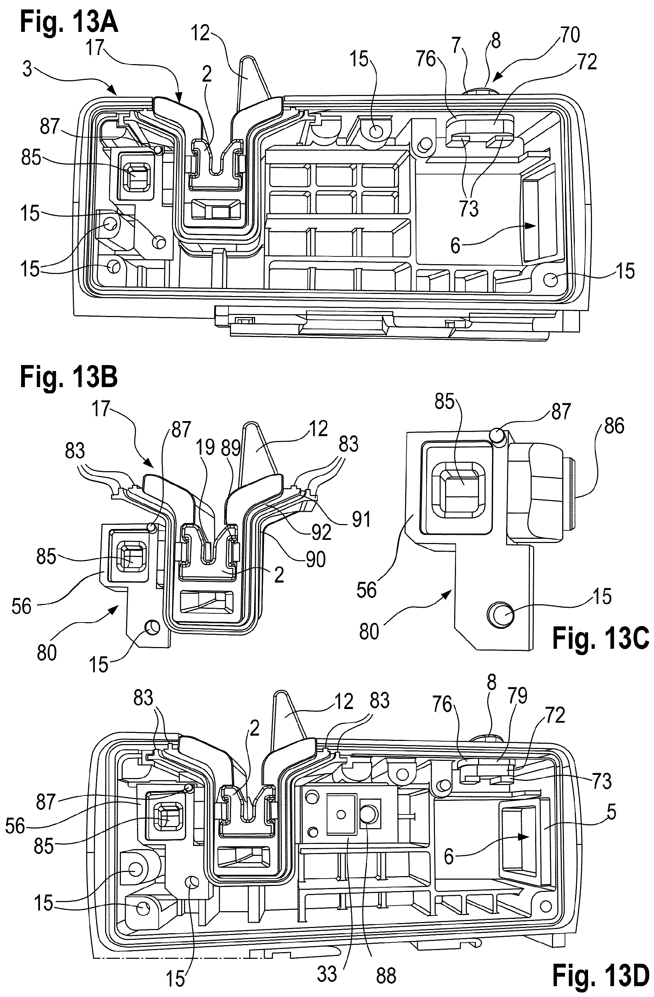

The clearer 10 comprises a housing body 3 that can be mounted to a textile machine via a mounting element 4. A yarn 34, which is not shown in Fig. 1, can pass a yarn guiding device 11 for yarn guiding. The yarn guiding device 11 can comprise at least two eyelets 2 which provide contact points for the yarn 34 to move in a measurement gap 9 of the window carrier 17, between a first window 19 on an emission side (where the illumination projector 30 projects light in a z-direction of propagation through the measurement gap) and a second window 89 (here not visible for reasons of perspective; please refer to Fig. 12A and 13B). Particularly between these two windows, light propagates to interact with the yarn 34. An air venting hole 1 can be provided to reduce vibrations from air flow and pressure build-up in the yarn guiding device 11, avoiding transfer of vibrations to the optical components to improve the measurement quality. The air venting hole 2 may be provided, as shown in Fig. 1, in the window carrier 17 alone, but may in other embodiments be formed by a combination of at least two of the window carrier 17, the eyelets 2, the housing body 3 or the housing cover 18. A yarn exit guide 12 may facilitate guidance of the yarn into the measurement gap 9 during automatic yarn placement. In addition, yarn exit guide 12 may prevent the yarn 34 from slipping out of the measurement gap 9 in case it is transferred to a transportation or storing spindle thereafter and changing the pointing therefore rapidly.

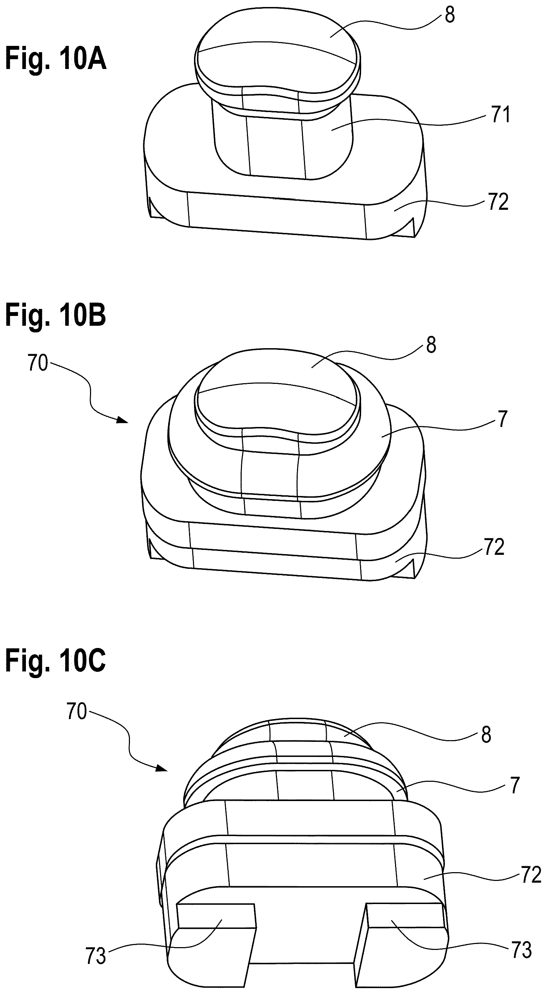

The clearer 10 can indicate certain measurement results via a button 8 with light guide 70 wherein the button 8 is placed in a seal dome 7 as described in great detail with respect to Figs. 10A to 10E. The clearer 10 may comprise a connector plug 6 (or a respective data transfer cable or wireless transmission device in other embodiments not shown here) in the housing body 3 which allows to transfer data and results from the measurements to a computer for example. The connector plug 6 may comprise a connector sealing 5 to avoid dust from entering the housing.

Fig. 2 shows a housing of a clearer 10 in an exploded view. The housing may comprise at least a first housing part and a window carrier 17. The window carrier 17 is configured and arranged in a first configuration at the first housing part for a light from a light source 32 (see Fig. 4 to 6 for details) to pass at least one of a first window 89 for illuminating a guided yarn 34 or a second window 19 to pass the light from the guided yarn 34 to a receiver (see Fig. 4 to 6 for details) as described in detail elsewhere herein. The window carrier 17 can be configured to be detachable from the housing, particularly reversibly detachable from the housing, for transition to a second configuration, particularly for cleaning at least one window 19, 89.

The housing may comprise a housing body 3 as first housing part and at least one PCBA 93. In some embodiments, as one is shown here, particularly a single PCBA 93 may be provided. Alternatively or additionally, a housing cover 18 may be provided as second housing part for covering and/or for sealing the housing body 3.

The window carrier 17 may carry at least one window 89 on an emission side and at least one window 19 on a receiving side. As already described with respect to Fig. 1, a yarn guiding device 11 may be formed by the window carrier 17 to guide the yarn 34 in a position for illumination between the emission side and the receiving side, so through the measurement gap 9.

In the exemplary embodiment shown, the clearer 10 housing consist of 3 parts: the housing body 3, carrying the single PCBA 93 and the detachable part carrying the windows 19, 89 (wherein the detachable part is therefore referred to as window carrier 17), the housing cover 18, covering and sealing the housing body 3 as well as the detachable window carrier 17. The housing cover 18 is particularly attached to the housing body 3 by screws. The window carrier 17 may be held by compression as well as by form linkage between the housing body 3 and the housing cover 18.

As shown in the exploded view in Fig. 2, particularly no individual, separate sealing compounds or seals, e.g. made out of elastomers, silicons and or rubbers, are used to seal the parts contributing to the housing, other than a seal dome 7 for an optional button 8 and a connector seal 5 for the connector plug 6. Further in particular, no glue is used between the parts. Further in particular, no electronics are connected to the housing, particularly all electronics are provided on a single PCBA 93. All internal connections can preferably be made by using screws (not shown here) placed in screw holes 15.

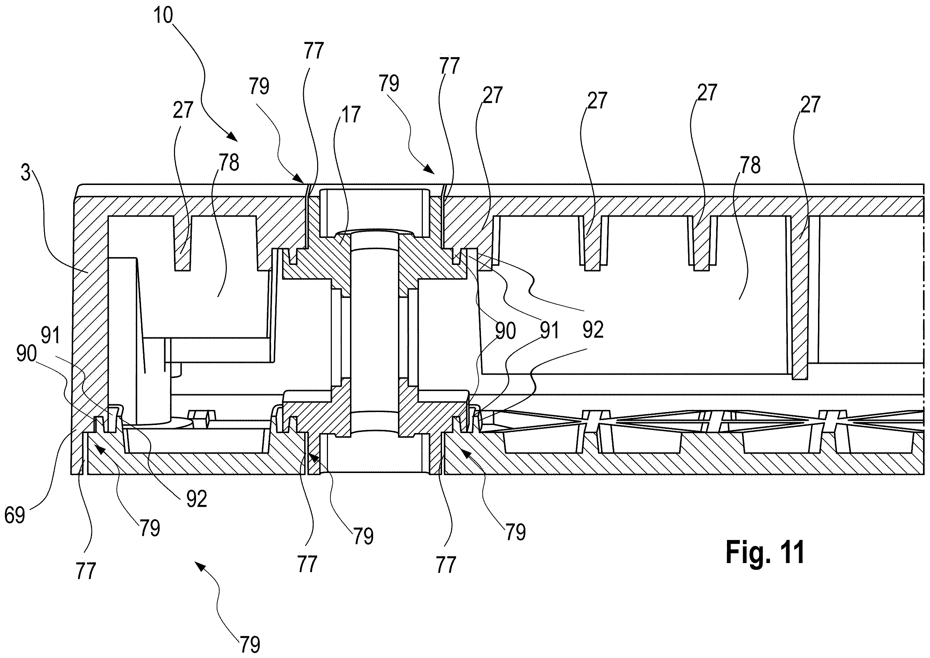

As a result, the whole housing including all the internal parts can be efficiently assembled with ease. To align all the components, ribs 27 allow to place the components in the right height and relative position inside the housing body 3, referred to as pockets 78 (see Fig. 11). Therefore, no special care may have to be taken during alignment, nor special thermal treatments may be needed for stress relief after assembly. As a result, the window carrier 17 can be easily exchanged by just removing and retightening a few screws. No re-calibration, no stress relief process may be required. Depending on the housing design, the detachable window carrier 17 can also carry the eyelets 2 for guiding and stabilizing the yarn 34 in the measurement gap 9 (see Fig. 1) of the clearer 10. An alternative design may be to integrate the eyelets 2 into the housing body 3 for one part and into the housing cover 18 as the other part. Alignment structures 16 may provide the respective support to pre-align all components to be placed inside the housing body 3 upon assembly.

The window carrier 17 comprises the windows 19, 89 as described elsewhere. The window carrier 17 may be placed in recesses 25 contacting a contact surface 14 for the window carrier 17 on the housing body 3 and similar contact surfaces 14 on the PCBA 93 and the housing cover 18. The window carrier 17 may interact with the housing body 3 via connector pins 13 and/or sleeves that form respective orthogonal sealing and locking features 83 as shown in Fig. 12B showing a cut view through a plane through the connector pins 13. It is understood that the connector pins 13 can be implemented pointwise as individual pins or pockets for location and or sleeves with a longitudinal shape covering location in combination with sealing.

Fig. 3 shows an illumination projector 30 with integrated mirror housing 31 functioning as a mirror holder for an exemplary embodiment of a waveguide 33 as shown in Fig. 4. Therein, an exemplary illumination projector 30 design shows an 45° angle for second surface mirror attachment, wherein the offset correction for the thickness of the second surface mirror as mirror 21 as well as the heat stacks 22 are shown in Fig. 3, to which the stamped mirror foil as mirror 21 can be placed and wherein heat stacks 22 can subsequently be molten to secure the mirror 21 in place.

As shown in Fig. 4, the LED as light source 32 is mounted in plane together with a receiving photodiode as photosensitive electronical component 37 on the PCB to form a PCBA 93, particularly being used for signal processing. The illumination projector 30 can have the light to be emitted by the light source 32, particularly in form of an LED, whereby the light source 32 is particularly mounted directly to the surface of the signal processing PCB, forming the PCBA 93, to particularly having a 90° angle of the illumination projection. The 90° illumination angle of the illumination projector 30 can be achieved by using a simple 45° mirror 21 added at the side of the light source 32, particularly the LED, to the waveguide 33, the waveguide 33 particularly being in form of a tube 26. A potential embodiment on mounting a mirror 21 together with the tube 26 as a single integrated component is shown in Fig. 3.

The 45° mirror 21 can be shaped and function as a prism (not shown), particularly using total reflection, or by adding a mirror coating at the 45° surface (as suggested in Fig. 4), by means of a simple first surface mirror (not shown) directly mounted to the illumination projector's 30 structure (not shown), or even simpler by means of a second surface mirror 21.

An exemplary low cost means of integrating a mirror surface to the illumination projector 30 can be achieved by using a second surface mirror foil. The mirror foil can be particularly easily produced by stamping large sheets of abundantly available commercial mirror foils to the required size, particularly so as the surface mirror coating may be mechanically protected. The base materials used for these foils can be one of PE, PP or PMMA, all of which having low surface tensions compared to glass or aluminum. The low surface tension may be an inherent protection against vapor condensation. If so required, the already low surface tension can be further reduced by additional surface coatings on sheet basis. The thickness of the foils can be selected such, that the offset in the projection of the light (light bundle) of the second surface is negligible in practical terms, for instance by selecting secondary mirror foils with a thickness ranging from 0.05 to 0.15 mm. In case thicker foils are used, the offset by the secondary surface can be easily accommodated by correct optical arrangement of the actual waveguide 33, particularly in form of a projection tube 26 of the illumination projector's 30 structure.

The secondary surface mirror can be secured to the illumination projector 30 using for instance glue. Direct gluing of the mirror 21 with particularly a low surface tension second surface to the illumination projector 30 can be avoided. A mechanical means of securing the mirror is for instance by means of a pocket in which the mirror 21 can be slit into following which the pocket being sealed off afterwards with i.e., glue. This is particularly done in production as additional sliders may be used during manufacturing of the illumination projector 30, but also the sliding of the mirror 21 into and the sealing of the pocket may be done. Moreover, the mirror 21 might get scratched during sliding into this pocket. Another alternative method may be applied by creating a box into which the mirror 21 can be placed followed by placing and/or pressing a cover into the box to be able to secure the mirror 21. In those embodiments, box as well as cover are particularly to be provided. This is further simplified (further saving resources) by a method of heat staking: during injection molding heat stacks 22 can be made to the sidewall of the waveguide 33, particularly as a projection tube 26. As the secondary mirror foil can be stamped, holes can be made at the position of the heat stacks 22. During assembly the mirror 21 can be placed over the heat stacks 22 of the illumination projector 30. In the following the heat stacks 22 can be molten down to the lining of the mirror foil. The result is a low-cost production process that can have a very high yield, that is particularly clean and yields a secure mirror attachment regardless of environmental conditions and thermal cycling.

To reduce sensitivity of the illumination receiving system 39 to environmental light in the measurement gap 9 of the yarn 34 and to reduce influence of back reflected stray light from the receiving optics, the exit aperture of the waveguide 33, particularly the projector tube, can be light absorbing (i.e. black). Furthermore, the end material may be non-specular and may have a shape that directs any light reflected off its surface away from the illumination receiving system 39 (which may be referred to as the receiver).

Fig. 4 shows a schematic diagram of an exemplary embodiment of an optical setup. Therein, an illumination projector 30 is shown which is configured for a shadow projection from a yarn 34 in a textile machine. Alternatively or additionally, the illumination projector 30 may be configured for illuminating a yarn 34 for light to be reflected from the yarn 34. The illumination projector 30 may be independently implemented from an illumination receiving setup 39 as shown elsewhere herein.

The illumination projector 30 particularly comprises at least one light source 32, particularly a light emitting diode or in short an LED. The illumination projector 30 particularly comprises at least one waveguide 33 and particularly a yarn guiding device 11. The light source 32 is particularly placed such that the emitted light enters the waveguide 33. The waveguide 33 is placed such that the light exiting the waveguide 33 particularly forms an area-source like emission on its exit side. The yarn guiding device 11 is particularly configured and positioned relative to the area-source like emission on the waveguide's 33 exit side to project a shadow from the yarn 34 to a receiving side or to reflect light from the yarn 34 to a receiving side. At the receiving side there may be one of different embodiments of an illumination receiving setup 39 as described elsewhere herein.

The waveguide 33 comprises in particular a tube, further in particular, the tube is a light-homologation tube. The purpose of the light-homologation tube is to destroy any pattern or image carried in the propagating light beam e.g., an emitter pattern of an LED. The cross section of the tube contained in waveguide 33 can be of a round, elliptical, rectangular or squared shape. In longitudinal direction, the tube may be straight or conical.

The cross section and the width of the waveguide 33 can be designed according to the required width of the light bundle and the height of the waveguide 33 can be designed according to the height requirement of the light bundle. In particular, the width of the waveguide 33 and the height of the waveguide 33 are individually and independently shaped according to the measurement requirements, wherein the width of the light bundle is adjusted to the width resolution e.g., of the yarn defects to be measured. They may correspond to the minimum length of the yarn defects to be detected. The height of the light bundle is particularly adjusted to the maximum size of the yarn defect to be measured.

The waveguide 33 may comprise a hollow core with an inner surface being diffusive and/or non-specular. This way a maximum of light may be propagated through the waveguide in form of a tube, particularly a light-homologation tube while simultaneously destroying any pattern or image being carried in the light beam. Fig. 4, 5 and 6 show different embodiments of the illumination projector 30, particularly considering the arrangement of the light source 32. Those may be combined freely with the different embodiments of an illumination receiving system 39 shown as matters of example.

After the light beam interacted with the yarn 34 moving or being positioned in a measurement gap 9 (see e.g., Fig. 1 or Fig. 2 for structural examples thereof), a shadow might be projected off from the yarn 34 into a direction of the receiving side. Additionally or alternatively, a light might be reflected off from the yarn 34 in other embodiments. The light propagation direction may be referenced as z-direction.

The illumination receiving system 39 can be configured for receiving a shadow projection from a yarn 34 in a textile machine or it can be configured for receiving light reflected from the yarn 34. The illumination receiving system 39 particularly comprises at least one receiving cavity 36 and at least one photosensitive electronical component 37 to form a detector. The receiving cavity 36 can be configured and placed relative to a yarn 34 such that light emitted from a light source 32 and projecting a shadow from the yarn 34 and/or being reflected from the yarn 34 to enter the receiving cavity 36. The light entering the receiving cavity 36 can be transmitted to the at least one photosensitive electronical component 37 as a detector for measuring the incoming illumination. The photosensitive electronical component 37 may also be referenced as a detector. It may be capable of transferring the incoming radiation into an electronical signal which might be analyzed to determine at least one yarn 34 characteristic, such as composition, impurification, defects from yarn 34 formation, etc.

An aperture 35 can be placed at the entrance of the receiving cavity 36. The aperture 35 may limit the light entering the receiving cavity 36, particularly in form of a lighthouse 59 to the light projecting the shadow or light being reflected from the yarn 34. Stray light or light from external light sources not included in the optical setup as described elsewhere herein, may be blocked by the aperture 35. At least the width of an aperture opening 42 of aperture 35 can be set to a range of a minimum length of the defect size of the yarn that is to be measured. Alternatively or additionally, at least the height of the aperture opening 42 of aperture 35 can be set to a range of a maximum defect size of the yarn that is to be measured.

Opposite walls of the receiving cavity 36 may be at least diffusive, non-specular, shaped such that they direct light away from the aperture or are light absorbing in the wavelength range in which the at least one photosensitive electronical component 37 - the photosensitive detector - is sensitive. An aperture of the receiving cavity 36 - not to be mixed up with aperture 35 in the beam path in front of the receiving cavity 36 - may be light absorbing in the wavelength range in which the at least one photosensitive electronical component 37 is sensitive. The surface may be non-specular or shaped or positioned such that it directs light in a direction where potential secondary reflections back into the aperture of the receiving cavity 36 are minimal. This may prevent stray light to reach the photosensitive electronical component 37.

At least one inner surface of the receiving cavity 36 comprises at least one of a non-specular surface finish or a highly reflective surface finish. This may improve the light propagation in the receiving cavity 36.

The exemplary embodiment of a combination comprising an illumination projector 30 and an illumination receiving setup 39, short the receiver, is shown in Fig. 4 and will be described here in greater detail. Therein, both the light source 32, here in form of an LED and photosensitive electronical components 37 can be mounted in plane of the signal processing PCBA 93 (here not shown). This allows that all electrical components can be assembled during a single pass soldering process. The receiving photosensitive electronical component 37, e.g., a photodiode or other type of photosensitive detector, has no direct line of sight to the emitting LED. By this morphology, in which all the electronical components are assembled in plane to the PCBA 93, and where the optical components (illumination projector 30 with waveguide 33 and mirror 21 in mirror housing 31 - see Fig. 3 - and receiving cavity 36 in form of a lighthouse 59) do not require direct assembly to this PCBA 93 but can be attached later during the product assembly process, particularly after the PCBA 93 is placed in the housing body 3. The decoupled assembly of the PCBA 93 and the (passive) optical parts allows a reversed assembly stack up, which shortens the time required for assembly. In addition, it allows undercuts in the design of the housing parts, particularly the housing body 3, which benefits the light projection. These undercuts may form pockets 78 as described with respect to Fig. 11 and shown therein, as well as ribs 27 for stabilizing the housing body 3, but also functioning as spacers for alignment of the respective component to be placed therein. An additional added advantage of the allowance of undercuts in the housing parts is in the sealing design of the housing. All of which are described elsewhere herein.

The illumination projector 30 may consist of a mere tube as waveguide 33. The following may also apply to waveguides 33 of different tape and structure e.g., glass fibers, photonic crystal fibers, etc. Here, the tube is referenced as a mere example. The tube can be simple in structure and may not require special mechanical positioning tolerances, nor any special mechanical size tolerances. The tube can be manufactured as a simple part, i.e. by injection molding as described elsewhere herein. This allows to put a light source 32, particularly an LED, at one side of the tube and receive a light bundle at the other side of the tube with favorable properties of having particularly both: a low divergent angle, and an even distribution and/or no vignetting.

The tube does not require tight mechanical manufacturing tolerances. In one embodiment it can be produced by extrusion and cut to the required length afterwards. The cross section of the tube can be varied according to the requirements: round, elliptical, rectangular, square etc. A particular shape may be elliptical as described in the following.

With an elliptical cross section, the width of tube can be designed according to the desired width requirements of the light bundle and the height of the tube can be designed according to the desired height requirement of the light bundle. The width of the tube and the height of the tube can be individually and independently shaped according to the measurement requirements: the width of the light bundle is particularly adjusted to the width resolution of the yarn defects to be measured. The minimum length of the yarn defect to be detected may determine the width of the tube, whereas the height of the tube is adjusted to the maximum size of the yarn defect to be measured. For a certain illumination intensity, the illumination flux of the light source 32, here the LED, increases according to the cross-section area of the tube, also to be referenced as projection tube. For an asymmetrical measurement requirement where the width of the defect resolution can be less as the maximum defect height (magnitude) a projection tube with an elliptic shape may result in a higher illumination intensity, given the same emitted illumination flux of the light source 32, here the LED, compared to a round tube.

Another advantage of the waveguide 33 as tube to form a projection tube is that the given design can avoid strict tolerances of the emission angle of the light source 32, particularly the LED, other than having a continuous first derivative of its projection profile. It does not even require to have the same angular emission profile in both axis, just a continuous first derivative in either axis. In case of asymmetrical emission axes of the light source 32, particularly as LED, these are oriented in accordance of the dimensions of the waveguide 33 as an illumination projector's 30 tube. The reduced requirements on the emission angles of the light source 32, particularly as LED, allow for a much wider selection range. The wider selection range allows for additional cost optimization.

To achieve these favorable properties of the light bundle, the structure of the inner surface of the waveguide 33 as tube needs to be diffusive and/or non-specular. The length of the tube can (predominantly) determine the resulting divergence angle, whereas the preparation of the internal surface can determine the vignetting of the resulting light bundle. Next to the geometry of the inner surface of the projection tube as described elsewhere herein, the efficiency of the projection is also determined by the reflective properties of the inner surface of the waveguide 33 as tube.

This optical setup can avoid an out of plane arrangement of the electro-optical components (light source 32, particularly as LED, photosensitive electronical component 37 as detector, particularly at least one photodiode) with respect to the processing electronics.

For manufacturing the light source 32, particularly the LED, and the photosensitive electronical component 37, particularly the at least one photodiode, they can be mounted on an additional flex-print (for each of them). Alternatively or additionally a rigid-flex PCB or through-hole components may be used. All these embodiments carry additional costs and complexity during manufacturing. The embodiments described with respect to Fig. 4 can simplify part design and can improve tolerances in their production. Furthermore, assembly and part maintenance as well as service are improved.

The illumination projector 30, producing a light bundle with even distribution (no vignetting) in combination with a low divergent angle, may not be limited to the application of providing a yarn sensor for detecting at least one characteristic of a yarn 34, but can be used in any optical sensor for through light and/or reflective measurements.

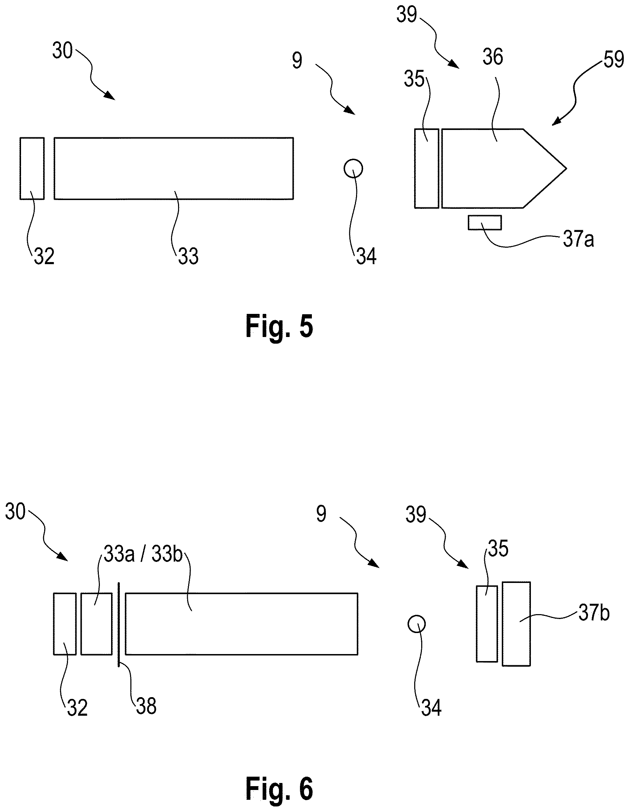

Fig. 5 shows a schematic diagram of an embodiment of an optical setup. In this embodiment an alternative combination of an illumination projector 30 and of an illumination receiving system 39 on the receiving side is shown. Therein, the waveguide 33 is a mere tube as projection tube as well, but with direct attachment of the light source 32, here also an LED, by using a through hole LED component, or where an SMD LED is mounted to a flex print whereby the flex print is attached separately and independently to the signal processing PCBA 93 or where an SMD LED is mounted to the flex part of a rigid-flex board. In each embodiment an additional and individual mounting process of the light emitting part of the light source 32 to the waveguide 33 as a tube may be required. The receiving photo sensitive electronical components 37 have no direct line of sight to the light source 32 as an emitting LED. All the properties described with respect to Fig. 4 for the waveguide 33 as a tube, but also for other types of waveguides 33, remain, except for the 45° mirror 21 (see Fig. 3) in mirror housing 31. The light source 32, here the LED, is no longer mounted in plane of the signal processing PCBA 93. At least the light source 32, here the LED, and the waveguide 33 in form of a tube need to be pre-assembled before continuing with the assembly of the other housing parts.

With respect to both, Figs. 4 and 5, it may particularly be possible to reduce the number of components for the illumination receiving system 39, being beneficial when the photosensitive electrical component 37 has no direct line of sight to the illumination projector 30 as illumination projection system. Without direct line of sight of the photosensitive electrical components 37 to the light emitting components, a diffusor 38 may not be required, as it is placed in the embodiment shown with respect to Fig. 6. Furthermore, to reduce the assembly overhead, the photosensitive electrical component 37 can be placed in plane to the signal processing PCBA 93. Placing all the receiving photosensitive electrical components 37 on the same PCB (to form the PCBA 93) as the signal processing components, the electronics can be assembled in a cost conserving single manufacturing method step, as described elsewhere herein.

The proposed exemplary solution can do both by using a lighthouse 59 as receiving cavity 36. The lighthouse 59 is a receiving cavity 36 in which all the light transmitted into it can be integrated by multiple reflections. The photosensitive electronical component 37 can be mounted to the side of the lighthouse 59 at a position where there is no direct line of sight to the incoming illumination entrapped by the lighthouse 59. This allows the photosensitive electronical component 37 to be placed in plane of the signal processing PCBA 93 without having a direct line of sight to the incoming illumination. Moreover, the lighthouse 59 does not need to be pre-assembled to the single PCBA 93, but this can be done at a later stage in the assembly process as described elsewhere herein. This allows the lighthouse 59 to be placed into the housing first by which an undercut assembly position as pocket 78 of the lighthouse 59 in the housing body 3 is possible. This allows for an optimized optical design with short optical path length at the illumination receiving system 39 and simultaneously allows a housing design to be optimized for ease of assembly.

Placed at such a mounting position e.g., in form of a pocket 78 (see Fig. 11), inside the lighthouse 59 without direct line of sight of the incoming light bundle, the photosensitive electronical component 37 may measure the brightness of the entrapped incoming illumination by the lighthouse 59. Due to this indirect measurement, the size of the photosensitive electronical component can be decoupled and can thus be independent of the size of the object to be measured. This allows for selection of the most suitable photosensitive electronical component 37, with criteria being one or a combination of response time, sensitivity, wavelength range, sensitivity over wavelength, Noise Equivalent Power, active size, packaging type, cost, etc. This selection criteria may be much wider and allows for an improved optimization, where the first criteria to be met can be the maximum defect size that is to be measured.

Fig. 6 shows a schematic diagram of an embodiment of an optical setup. In this exemplary embodiment a waveguide 33 as tube with direct attachment of the light source 32, as LED, by using a through hole LED component, or where an SMD LED is mounted to a flex print whereby the flex print is attached separately and independently to the signal processing PCBA 93 or where an SMD LED is mounted to the flex part of a rigid-flex board, is shown. The light source 32 as LED is no longer mounted in plane of the signal processing PCBA 93. In each of those embodiments an additional and individual mounting process of the light emitting part of the light source 32 to the waveguide 33 as tube is particularly required. At least the light source 32 as LED and the waveguide 33 as tube are particularly pre-assembled before continuing with the assembly of the other housing parts.

The receiving photosensitive electronic component 37 can have a direct line of sight to the light source 32, particularly as emitting LED. The direct line of sight of the photosensitive electronical component 37 to the light source 32, particularly as LED, may require an additional diffusor 38 at the side of the light source 32. Without diffusor 38, the photosensitive electronical component 37 may look straight into the light source, here the LED, and be "blinded" by it. The contours of the light source 32 may be distinguished by the photosensitive electronical component 37 and may affect a uniform sensitivity of yarn defects over the measurement range over the aperture 35. This may be in analogy to a human looking straight into the sun or lamp. For maximizing the working length of the waveguide 33, particularly as a tube, the diffusor 38 may be put immediately after the light source, particularly the LED, in z-direction when propagating from the light source 32. An alternative position can be at the side of the photosensitive electronical component 37, so in the illumination receiving system 39. However, as the photosensitive electronical component 37 may be placed at the exit of the receiving aperture 35, results in inefficient use of the diffusor 38 with the risk of the contour of the light source 32, particularly the LED, may still be noticeable in the measurement field of the photosensitive electronical component 37. Putting the diffusor 38 immediately in front of the photosensitive electronical component 37 before the light bundle hits the photosensitive electronical component 37 may result in the contours of the light source 32, particularly the LED, to be still noticeable by the photosensitive electronical component 37. In the embodiment shown in Fig. 6 a tall detector 37b is used in accordance to the height of aperture 35. In particular, the length of the tall detector 37b may exceed the dimensions of the light beam hitting the aperture 35. In the embodiment shown in Fig. 5 (and respectively in Fig. 4) a small detector 37a may be used which reduces the costs, but also may function at least partially as an aperture, particularly in addition to the aperture 35.

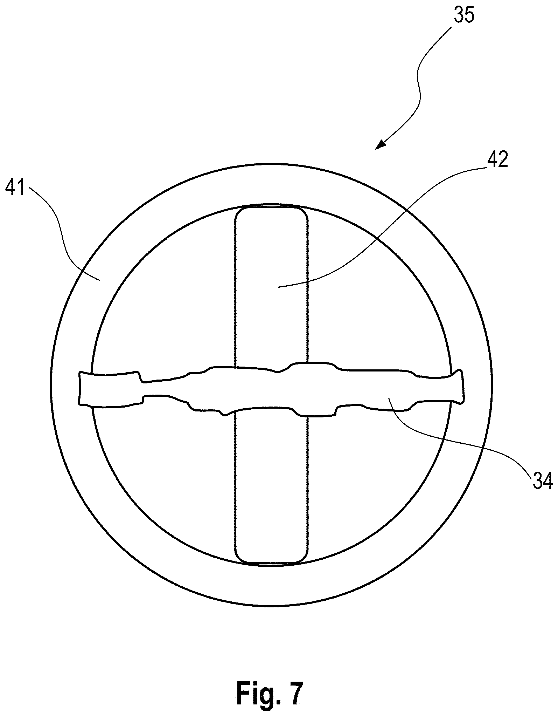

Fig. 7 shows a schematic representation of an embodiment of an aperture 35 with passing yarn 34. The aperture 35 comprises a mounting ring 41 and an aperture opening 42 where the light passes through in z-direction from the light source 32 (here not shown, but see Figs. 4 to 6 for exemplary embodiments). Here, the perspective is in z-direction, thus the light source 32 is behind the viewer. To reduce the sensitivity to environmental illumination conditions, an aperture 35 can be placed at the entrance of the incoming light of the lighthouse 59, as shown in Figs. 4 to 6. To particularly block out unwanted environmental light, the width of the receiving aperture opening can be similar in range as the minimum length of the defect to be measured. The height of the aperture 35 can be in range of the maximum defect size that is to be measured. A thin aperture will allow light from all angles of the opening hemisphere to go through the aperture opening 42. A thin aperture has no angular blocking. In embodiments where there is a direct attachment of the lighthouse 59 to the aperture 35, a thin aperture is particularly not used as e.g., in the embodiments shown in Figs. 4 and 5. Instead, for effective suppression of environmental light, the aperture 35 is such that it can reduce the opening angle over which light is to enter into the lighthouse 59. The receiving aperture 35 particularly reduces the opening angle of the lighthouse 59 over which light can be received. The exact calculation of the aperture opening dimensions of the lighthouse 59 can take the opening angle of the aperture 35 and the nominal distance of the yarn 34 to the aperture 35 into account.

In Figs. 4 and 5 a thick aperture is used as aperture 35 as a simple-to-implement, low-cost solution. As a numerical example of the opening angle of a thick aperture, a mere mechanical aperture width of 1 mm and a depth of 4 mm- corresponding to the thickness - can have an opening angle of 28°. Any light bouncing off from the opposite wall of the illumination receiving system 39 in the direction of the lighthouse aperture 86 within the 28° reception conus can pass through the aperture 35. Regardless of the exact dimensions of the opening of a thick aperture, it is therefore beneficial to design the opposite walls of the illumination receiving system 39 to be non-specular, particularly with a shape that directs light away from the receiving aperture and which may be light absorbing in the wavelength range in which the photosensitive electronical component 37 is measuring. Therefore, it may be coated with a carbon component to render it black. Furthermore, to avoid secondary reflections, the aperture of the receiving cavity 36 itself can be light absorbing in the wavelength range in which the photosensitive electronical component 37 is measuring. The aperture of the receiving cavity 36 may be non-specular and may direct light in a direction where potential secondary reflections back into the aperture of the receiving cavity 36 are minimal. When using a lighthouse 59, the embodiments can comprise a thick aperture in combination with anti-secondary reflective shapes of the lighthouse aperture 86 and of other opposing structures, particularly combined with a light-absorbing coating or respective light-absorbing materials of these structures.

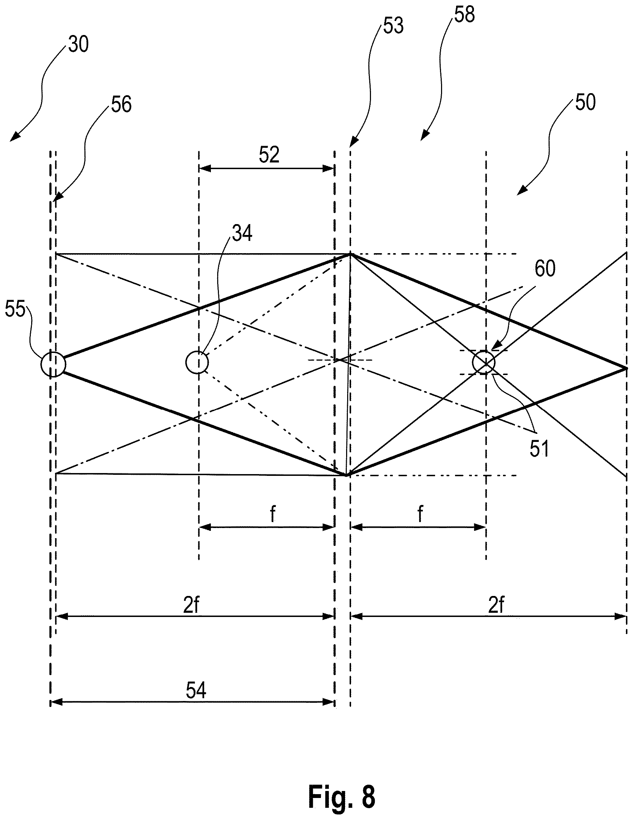

Fig. 8 shows a schematic ray diagram of an embodiment of an optical setup. Therein, a thin aperture 53 with lens assembly can be placed in front of the entrance of the receiving cavity 36 in an f-configuration for a shadow projection. The aperture opening 42 of aperture 35 is schematically represented as aperture diameter 51. Even though the aperture diameter 51 is referenced, the respective aperture opening 42 does not have to be round as described in detail elsewhere herein.

In case of a shadow projection, alternative embodiments to those described with respect to Figs. 4, 5 and 7 may combine a lens with a single aperture to further enhance the Signal to Noise ratio (S/N). A thin aperture with the desired sizes according to the defect to be measured can be in close spatial proximity to a focusing lens. The thin aperture together with the lens may form a thin aperture with lens assembly 53 which may be placed in a wall of the measurement gap 9, opposite to the illumination projector 30. The focal length of the lens can be selected such, that the focal length f is half the measurement gap width 54, the width of the measurement gap 9. The collimated light from the illumination projector 30 impinges onto the aperture 35 with lens assembly 53 and is focused by the lens on its focal point being placed inside the opening diameter 51 (the thin straight lines in Fig. 8). Stray light (dash-double-dotted lines in Fig. 8) particularly originates from the yarn 34 may impinge onto the aperture and may be converted to a parallel (collimated) beam of light by the lens. Stray light originating from the outer bounds of the illumination projector objects 56 (dash-dotted lines in Fig. 8) can pass the aperture with lens assembly 53 particularly having the same angle as that with which they were impinging. Stray light particularly originating from the center 55 of the illumination projector objects 56 (thick straight lines in Fig. 8) may pass the aperture and may be focused by the lens at a distance of 2f behind the lens assembly 53. From the ray traces in the Fig. 8, providing a simple pin-hole with aperture diameter 51 at the entrance to the lighthouse 59 at the position of the secondary focus point 60 of the lens assembly 53 can remove most of the stray light projections originating from the opposite wall (dash-dotted and straight lines in Fig. 8) as well as from the yarn 34 (dash-double-dotted lines in Fig. 8). The part holding the thin aperture with lens assembly 53 may be connected by a tube to the lighthouse 59, the interconnecting tube 58.

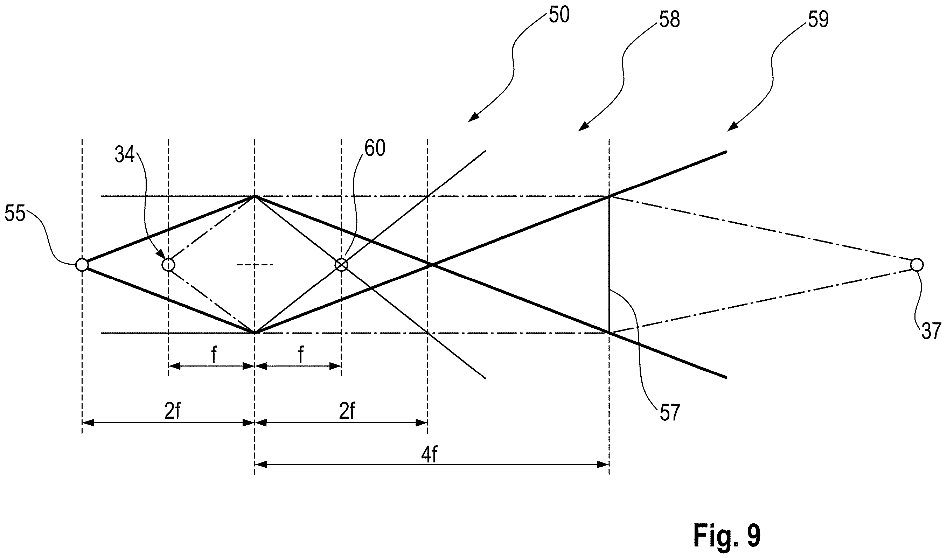

Fig. 9 shows a schematic ray diagram of an embodiment of an optical setup. Therein, a thin aperture with lens assembly 53 can be placed in front of the entrance to the receiving cavity 36 in a greater than 2f configuration, particularly mounted in an interconnecting tube 58, for a reflection arrangement, particularly wherein the aperture opening size of the aperture of the receiving cavity 36 matches the aperture opening 42 size of the thin aperture of the thin aperture with lens assembly 53.

In case of a reflective arrangement, the embodiment shown in Fig. 9 and described in the following increases Signal to Noise ratio (S/N). The reflective arrangement can use the same thin aperture with lens assembly 53 as was described with respect to the shadow projection arrangement from the embodiment depicted in Fig. 8, but the entrance to the lighthouse 59 may be positioned at a distance further then 2f from the lens and the entrance 57 to the lighthouse 59 may have the same opening as the thin aperture, particularly the aperture diameter 51. The distance between the lighthouse 59 and the lens may be at least 4f.

Light reflected off the yarn 34 (dash-dotted lines) after passing through the aperture 35 with lens assembly 53, can be converted by the lens to a beam of parallel light rays (collimated beam). This light beam can pass the entrance to the lighthouse 59. Parallel (collimated light) back reflected from the opposite wall (thin straight lines in Fig. 9) are, after passing the aperture of the aperture with lens assembly 53, focused to the secondary focus point 60 of the lens. Because of their steep angle, these rays can be absorbed by the walls of the interconnecting tube 58 between the lens and the entrance 57 of the lighthouse 59. Stray light, seemingly coming from the center 55 of the opposite wall (straight thick lines in Fig. 9), are, particularly after passing through the thin aperture, focused at a distance 2f from the lens by the lens of assembly 53. Because of the focus angle, this light spot will increase to the size of the thin aperture at distance 4f from the lens.

In other words, the embodiments described can provide the means for implementing a method for projecting a shadow off from a yarn or for reflecting light off a yarn 34. The method may comprise the steps of providing light emitted by a light source 32. At least a part of the light emitted by the light source 32 may be collected in a waveguide in a method step. The light from the waveguide 33 may be transmitted to a yarn.

Alternatively or additionally, the embodiments described can provide the means for implementing a method for measuring at least one characteristic in a yarn e.g., yarn defects. The method can comprise the step of emitting light from a light source 32 to a yarn 34 such that the light projects a shadow from the yarn 34 and/or the light reflects from the yarn 34. In a step the light with the projected shadow or reflected from the yarn 34 can be collected in a receiving cavity 36. In a step the light entering the receiving cavity 36 can be transmitted to at least one photosensitive electronical component 37 such that the incoming illumination is to be measured.

Fig. 10A shows a top perspective view of an embodiment of a dual use light guide 70 with uses of signaling to the operator and the ability to provide operator feedback by means of a button press action. Light guide 70 consists of an operator activatable head 8 connected to a light guide shaft 71 for conducting light from a signaling light source, particularly a signaling LED (not shown). The light guide shaft 71 and head 8 are particularly placed on a basis 72, wherein the light guide shaft 71 particularly forms a shaft to transmit the force of pushing the head 8. In a particular arrangement, head 8 is used for distribution of the light transmitted by light shaft 71 in a preferred direction to the operator, and in which basis 72 is used to efficiently collect light from the signaling LED (not shown). In particular, light guide 70 consisting of head 8, light shaft 71 and basis 72 and in which head 8, light guide shaft 71 and basis 72 are optically interconnected and constitute a single part.

For indicating the state of the clearer 10 to an operator, indicating lights can be used. These indicating lights can be implemented by one or multiple LED's. The LED's can have single color or consist of multiple colors. A typical intuitive color scheme when running may be green for OK and red for FAULT (corresponding to traffic light colors). Besides these states there can be many other states of which the operator is to be informed: length of yarn to be removed, clearer blocked, incorrect yarn parameters, communication faulty etc.

An indication method may be implemented based on using blinking schemes of the LEDs used for indication. The blinking period and blinking scheme can indicate the state. The blinking scheme can extend to all the LED's available for indication use, conveying morse-type signs to the operator. Even though the messaging is less-intuitive as display communication and may take some initial training to get familiar with the morse-type code, its implementation is beneficial because of the variance of timing schemes. Moreover, LEDs are visible and distinguishable from a far distance. Furthermore, displays are more costly and more demanding in space, maintenance and implementation.

Instead of a display, using multiple LEDs or a couple of LEDs combined with a blinking scheme, particularly a signaling RGB LED is proposed by which the most important states can be easily indicated by intuitive color coding. With the RGB LED traffic light signaling as well as other states can be implemented. With the inclusion of a single timer on the signaling RGB LED the number of states can be doubled, moreover closely related states or problems can be indicated by "color + non blinking" and "color + blinking". For instance, three different colors to indicate the amount of yarn 34 that is to be removed (short, middle, long) can be used. An alternative can be to choose a color in combination with a timing sequence to indicate the amount of yarn 34 that is to be removed. In these signaling schemes, either a positive or a negative regime can be adhered to. A positive scheme may indicate the amount of yarn that is to be removed, a negative scheme may indicate that yarn is to be removed until all the yarn that is to be removed has been removed. In a positive scheme, "short blinking" may correspond to "short fault", "little yarn to be removed", "middle period blinking" may correspond to "middle fault", "several meters of yarn to be removed", "long period blinking" may correspond to "long fault", "considerable yarn needs to be removed (i.e. 10m or more)". In another embodiment adhering to a negative regime, the signaling LED may keep indicating yarn to be removed for as long as there is still yarn to be removed.

The signaling LED can be linked to a light guide 70. The shape of the light guide 70 may be such that it emits an elliptical illumination pattern: the emission flux side wards to the adjacent spindles are considerably larger compared to the emission angles in up (ceiling) and down (floor) direction. This emission pattern gives better visibility to the operator from far and reduces power consumption or necessity of LED loading to do so. Both improve efficiency. Further to the shape of the dome at the top of the light guide 70, ellipsoidal Fresnel lenses or other structures impressed to the light emitting surface of button 8 (particularly its head) can be incorporated in addition to improve light distribution into the desired direction. Another feature for improvement of the light guide's 70 efficiency is to adapt the surface of the light guide 70 at the basis 72 where the light of the LED is coupled into, according to the emission profile of the signaling RGB LED and the desired light distribution i.e., typically domed as well, alternatively a conus shape. As shown in Fig. 10C, wherein a perspective bottom view of an embodiment of a light guide 70 is depicted, stopper 73 may be in place. When using light guide 70 as a button 8, stoppers 73 constraint the movement of the head in downwards direction to the side wall of the PCBA (not shown) and prevent over exerting pressure to a (micro) switch that is assembled to the same PCBA. Incorporating stoppers at both sides of light guide 70, reliably prevent overexerting the (micro) switch also in case of tilted activation of head 8. The basis 72 may also engage with an LED, particularly in-between the stoppers 73, to couple light into the light guide shaft 71.

Besides indicating the state of the clearer 10 to the operator, often the clearer 10 (or its control system, control function and/or computer program products) desire to receive feedback from the operator, for instance in form of an acknowledgement or a confirmation that a certain corrective process or handling has been completed or can be initiated. To get the feedback from the operator a button 8 can be integrated into the clearer 10. The button 8 is particularly an additional component that can be placed onto the housing, particularly the housing body 3. In the housing provisions can be made for the button 8 to be holstered. Furthermore, the parts can be produced, assembled and checked.

Integrating the button function together with the indicating light guide 70 can help reducing costs. A simple and robust alternative exemplary embodiment is that of a mechanical solution requiring the light guide 70 to be movable. The light guide 70 may be pushed down by the operator if so required and retracts on its own upon release. A mechanical solution is particularly independent of the means by which the button 8 is pressed. A mechanical solution is able to give tactile feedback to the operator pressing it.

An alternative exemplary embodiment to a mechanical button 8 can be an all-optical solution. In an all-optical solution, an additional photodiode may be used with which the variance in brightness of the returned or back-reflected light of the light guide 70 upon activation and/or blocking and/or reflection by the operators hand of the light guide 70 is measured. In this embodiment moving parts are avoided, which reduces mechanical maintenance requirements. Therefore, no tactile feedback can be given and the function may be dependent on environmental circumstances (sunlight exposure).

Fig. 10B shows a top perspective view of an exemplary embodiment of a button 8 with a seal dome 7. For embodiments implementing the mechanical button 8, the light guide 70 can be capable to move down when being pressed by the operator and can be capable to retract on its own upon release. The spring-loaded action for the light guide 70 to retract on its own can be implemented by the sealing. The sealing may comprise a seal dome 7, which compresses when being pressed which results in storing energy in a material deformation used to return to its original shape when released. The tactile feedback can be achieved by activating a micro-switch at the end of the stroke of the light guide 70. To ensure the micro-switch is not over-pressed by the operator, a mechanical stopper 73 may be integrated into the PCBA 93 (here not shown) to which the tactile switch is assembled. By implementation of the stopper 73 on the same PCBA 93 as the tactile switch, all tolerances can be controlled during PCBA 93 manufacturing particularly reducing cost and increasing accuracy. Introduction of tolerances during assembly or other tolerance stack ups can thus be avoided.

A basis 72 can be integrated as a flange underneath the button and/or the light guide that is significantly wider compared to the opening in the housing body 3 where the button 8 or the button with seal dome 7 is to be implemented. The light guide 70 and/or button 8 can be assembled together with its seal dome 7 from the inside of the housing prior to assembly of the PCBA 93. Through the integrated flange, the button 8 to the outside is constrained by the housing body 3 and to the inside by the PCBA 93 (after its assembly). This can reduce the risk that the described button 8 (alone or together with a seal dome 7) can inadvertently be removed from the housing body 3 e.g., by a fingernail gripping in the seam (not shown) between housing body 3 and button 8 or between seal dome 7 and housing body 3.

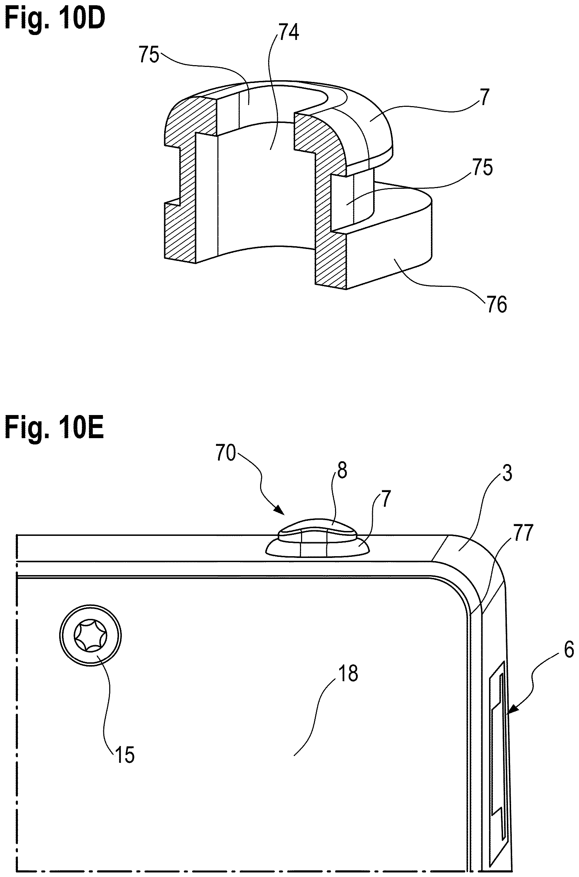

Fig. 10D shows a partial cut view of an exemplary embodiment of a seal dome 7 for a button 8 as described with respect to Figs. 10A to 10C. The seal particularly comprises a hollow core 74 that can be configured and positioned for the light guide 70 to be incorporated therein. The button 8 can be surrounded in a circumferential direction by the seal dome 7. A spring part 75 can support the spring action by deforming upon pressing the button 8, storing energy in the material deformation to return to the original unpressed configuration upon release of the pressure on the button 8. Furthermore, a seal basis 76 can be provided to insulate the button 8 and/or the light guide 70 mechanically and electronically from the PCBA 93 (not shown).

Fig. 10E shows a button 8 with seal dome 7 surrounding it, placed as button with light guide 70 at a housing body 3. The perspective view is onto the bottom of the housing, where the housing cover 18 is sunk into the housing body 3 as described elsewhere herein. A screw is shown being located in a screw hole 15 to compress the housing cover 18 into the housing body 3, forming a seam 77. Thus, the button may be positioned such that it protrudes on a sidewall of the housing body 3 when placed in textile machine.

Fig. 11 shows a cut view through a plane parallel to the yarn propagation direction and parallel to a z-direction through a housing. The window carrier 17 can be held by compression between the housing body 3 and the housing cover 18 forming a linkage between the housing body 3 and the housing cover 18. The linkage particularly comprises no sealing compound or seal which seals the parts contributing to the housing. The linkage particularly comprises no glue which glues the parts contributing to the housing. Furthermore, no electronics are connected to the housing.

To prevent dust ingress into the housing the clearer 10 can meet dust protection rating IP5X, particularly IP6X. Therefore, the embodiment depicted in Fig. 11 comprises a sealing that is a combination between form consistent part design and a meandering sealing.

The housing cover 18 may comprise a gravity seal. To do so, the clearer 10, the housing body 3 and the housing cover 18 are configured such that the housing cover 18 may be arranged at the bottom of the clearer 10, latest when implemented into a textile machine for operation. In addition, the housing cover 18 is particularly sunk into the housing body 3. Therefore, there are particularly no cover seams 77 to the side of the housing body 3 only underneath as shown in Fig. 10E for matter of example. By close form fit of the housing cover 18 to the sidewalls of the housing body 3, a first seal can be created. By placing the housing cover 18 at the bottom and sunken into the housing body 3, all dust falling in direction of gravity, cannot enter into the housing, because of gravity (gravity seal).

Further for avoiding of dust to penetrate though the housing cover's 18 seal, a double meandering sealing 79 with form fit can be employed. To penetrate the housing cover's 18 seal, dust would have to move up (against gravity) between the housing body's 3 side wall 69 and housing cover 18, particularly up to a first recess of the housing cover 18. There, the dust would have to move horizontally between housing body 3 and housing cover 18 until reach a first wall 90. There the dust would have to move up again (against gravity) between housing body 3 and housing cover 18, followed by a horizontal movement at a next recess in the housing body 3 (the top of the first wall 90), then down in direction of gravity into a valley 91 before reaching a second wall 92 when migrating in horizontal direction, where it would have to move up one more time again against gravity. Because of the tight form fit and the compression of the housing cover 18 to the housing body 3, particularly by screws, this sealing may achieve an IP6X dust protection rating.

The same sealing technique can be employed for sealing the window carrier 17 to the housing body 3 at the top as well as sealing to the housing cover 18 at the bottom. For sealing of the window carrier 17 to the front or to the stern side of the clearer an even more elaborate meandering seal is implemented: by using two orthogonal sealing features as shown in Fig. 12B.

Therein, the dust would have to move first sideways to the back of the clearer 10 and/or of the housing body 3, then horizontally to the side of the housing body 3, followed by a forwards movement, followed by again a horizontal movement, then followed by a repeated movement to the back of the housing after which another horizontal stretch needs to be passed followed by a third movement to the back succeeded by fourth horizontal movement and a fourth movement to the back after which a reversed sideways stretch is to be passed and then a final fifth movement to the back. This is also shown in the Fig. 2, where the window carrier 17 is shown from a top angled view. In this and alternative embodiments several angles as well as reversed motion directions are provided. These angles and reversed motions do not have to be full U-turns as described above. Alternative, several different angles can be chosen and also several meandering length of the path provided for the dust to pass. The particular scheme may be provided such that it achieves the desired dust protection rating. The embodiment of the double meandering seal 79 as shown in Figs. 11, 12A and 12B, particularly in concatenation with Fig. 2, can achieve IP6x dust protection rating as it is defined on the date of filing or the date of priority.

Fig. 12A shows a cut view through a first plane perpendicular to the yarn propagation direction through a housing showing a selected part thereof. Fig. 12B shows a cut view through a second plane perpendicular to the yarn propagation direction through a housing showing a selected part thereof. In both, Fig. 12A and Fig. 12B meandering sealings are shown that block dust from entering the housing body 3 due to a form fit between the housing body 3 and Window Carrier 17 and housing cover 18.

Fig. 12A refers to the double meandering sealing 79 as described with respect to Fig. 11, just in a bottom view, not in a cut view. The gravity seal can be formed by the housing cover 18 (here not shown) sunken into the housing body 3 to be oriented such that the housing cover 18 forms the bottom of the housing. In this and alternative embodiments several angles as well as reversed motion directions are provided. These angles and reversed motions do not have to be full up-down-turns as described above. Alternatively, several different angles can be chosen and also several meandering length of the path provided for the dust to pass. The particular scheme may be provided such that it achieves the desired dust protection rating.

Fig. 12B shows the stern side sealing arrangement with orthogonal locking and sealing arrangement 83 that forms a meandering seal as described already with respect to Fig. 11 for the window carrier 17. In this and alternative embodiments several angles as well as reversed motion directions are provided. These angles and reversed motions do not have to be full U-turns as described above. Alternative, several different angles can be chosen and also several meandering length of the path provided for the dust to pass. The particular scheme may be provided such that it achieves the desired dust protection rating.

The above-described embodiments prevent the use of individual and separate sealing components which would have to be placed between housing parts such as the housing body 3 and the housing cover 18. The use of individual and separate sealing components between housing parts may require their production and transport to the assembly position. In case of an elastomer, the elastomer would have to be selected, produced, transported and subsequently assembled. The fitting of an elastomer often comes with issues of form fit: A bit to short and the sealing tends to jump out because of the stretching and tensioning, a bit too long and there is a tendency to buckle following from the surplus material's tendency to form a buckle which is potentially cut when tightening the housing parts, potentially weakening or destroying the sealing component.

During field service the individual and independent elastomer seal would undergo aging of the material. Thus, the material might lose elasticity when compared to the elasticity it had during production. It potentially also provides sticking issues to a housing part, etc. Also, upon opening of the housing, the individual and independent seal, although visibly in shape, might have lost at least some level of its former elasticity which causes a risk after re-tightening of the housing.

When using an independent and individual sealing compound production is costly. During servicing, the independent and individual sealing compound may need to be broken or opened. This can be done by heating for example. During heating, it would have to be ensured, that the storage temperature range of the clearer 10 is not exceeded, to reduce the risk of degradation of the housing material and or of internal component alignments. All these drawbacks may be circumvented by the embodiment as described above.

Fig. 13A shows a cut view through a first plane perpendicular to the yarn propagation direction through a housing shown in full, partially assembled. Fig. 13B shows an embodiment of a window carrier 17 with an embodiment of a lighthouse 59. Therein, eyelets 2 can guide and stabilize the yarn 34 in a measurement gap 9 of a clearer 10. The eyelets 2 may be placed in the window carrier 17. Alternatively, the eyelets 2 can be placed at the housing body 3 for one part and at the housing cover 18 as the other part. Fig. 13C shows an embodiment of a lighthouse 59. Fig. 13D shows a cut view through a first plane perpendicular to the yarn propagation direction through a housing shown in full, partially assembled with an optical setup placed therein.

Figs. 13A to 13D show a partial representation of a method of assembling a housing in their respective order. The point of view is from a bottom into the housing body 3. The housing cover 18 is not sunk into the bottom of the respective housing body 3, yet. Therein, the step of placing optical components in a housing body as shown in Fig. 13A and concluded in Fig. 13D is shown. Prior to assembling the optical components to set up an optical setup, the button 8 as button with light guide 70 may be placed into a fitting hole in the housing body 3 and sealed using the seal dome 7 with seal basis 76. The placing of the optical components can be followed by placing a PCBA 93 in the housing body 3, further followed by a step of connecting the optical components and the PCBA 93.

In doing so, no optical (fine) alignment is to be performed on the optical components to be linked with the PCBA 93 except for mounting the optical components to the same plane on the PCBA 93, particularly giving already the only required course alignment.

The window carrier 17 can be placed in the housing body 3 as shown in Fig. 13A. In case of an optimized illumination path with an undercut of the lighthouse 59 to the window carrier 17 it might be provided during assembly to have a combined insertion process for lighthouse 59 and window carrier 17 (Fig 13 B). The lighthouse 59 is shown in Fig. 13 C in isolation. Therein, a holder 80 may provide a screw hole 15 to screw the lighthouse 59 to the PCBA 93 at a later stage during assembly. An alignment pin 87 provides the necessary alignment, particularly together with the ribs 27 as they were shown in Figs. 12A and 12B for example to align the optical as well as the electronical components. The PCBA 93 may place in the alignment pin 87 and thus align receiving photo sensitive electronical component 37 (here not shown as the PCBA 93 is not in place).

Because the housing particularly has no individual and separate sealing component or seals made out of elastomers, silicons and or rubbers the housing can be assembled or disassembled multiple times and particularly because of using only screws, the assembly or disassembly can be done with ease. Together with the undercut of the housing forming pockets 78 as shown and explained with respect to Fig. 11, no special alignment has to be performed. Furthermore, no aging processes take place. This allows for completion of the complete assembly in one go. As the whole assembly can be done at a single stage, this saves valuable floor space in the production facility. Moreover it can save on production effort: No part is handled twice. This saves further resources. As an additional benefit, the assembly process facilities automation during production.

As described elsewhere herein, all electronics are on at least one PCBA 93, particularly a single PCBA 93. Alignment structures 16 can align the PCBA 93 with the optical components. The alignment tolerances of the waveguide 33 as projector tube and lighthouse 59 with aperture 35 (here not visible) are accommodating. This may avoid the need of a special alignment procedure other than mounting them to the same plane on the PCBA 93 and particularly ensuring general alignment by placement of pinholes in the mounting plane PCBA 93. The alignment by alignment structures 16 on the PCBA 93, but also by the ribs 27 and the formed pockets 78, the optical components such as the waveguide 33 and/or the lighthouse 59 can be placed such that they already align with the PCBA 93 before it is even introduced to the housing body 3. A beam entrance 88 of the waveguide may align with the light source 32 (not shown), while a beam exit 85 of the lighthouse 59 may align with the photosensitive electronical component 37 (not shown in Fig. 13D).

For improved serviceability as well as increased throughput during assembly, particularly only screws are used, but no gluing, as already described elsewhere herein. Because no special alignment requirements are mandatory due to the structural design, the optical components can be placed individually into the housing body 3 first and only connected to the PCBA 93 after the PCBA 93 has been assembled into the housing body 3. This reverses any assembly process where PCBA 93 and optics are assembled to a sub-module first. To the contrary, in the depicted exemplary embodiment, the optics are placed into the housing body first (after the button 8 is placed, but this can be independently performed, unless it is placed before the PCBA 93 is placed). This allows to implement undercuts as pockets 78 (see Fig. 11) in the housing body for placement of the optical components. This in turn allows for independent optimization of the design of the optical components and the sealing design of the housing as was described in detail herein with respect to Figs. 11 to 12B.

In another step (not shown), the housing cover 18 is sunk into the housing body 3, particularly following a step of placing the PCBA 93. There might be no intermediate testing of any electronical sub-modules, as all the required tests can be conducted on the final assembly. Should a problem be detected, disassembly of the housing is quite fast after which the problem can be fixed (rework loop). By this process, assembly throughput is increased, the number of skilled operators as well as the required floor space in assembly may be reduced and production automation may be facilitated.

As a summary, the method for assembly of a housing or a clearer may comprise the following steps: The housing can be placed in an assembly fixture. The sealing 5 for the connector 6 and/or sealing dome 7 for button 8 can be inserted, followed by inserting the light guide 70 and/or button 8. These steps can also be reversed. The window carrier 17 may be put together with the illumination receiving system 39 as an insertion combination into the housing body 3 (sliding and pressing the window carrier 17 into the housing body 3: light compression may exist, even though it is not screwed in yet). During this process normal production cleanliness can be sufficient. Windows 19, 89 of the window carrier 17 can be checked on obvious dirt / smear prior to insertion. It can further be checked that no foreign particles are in the receiver cavity 36 and that the aperture 35 is open, having the intended shape and structure. Sub-assemblies may be provided in that the lighthouse aperture 86 may be pushed into the lighthouse 56 and in that the eyelets 2 may be heat staked to the window carrier 17. The illumination projector 30 as assembly may be put into the housing body 3. The illumination projector 30 as assembly can be checked on cleanliness and that no foreign particles, no scratches and no deformations are present in the waveguide 33, particularly in form of a tube. Photodiode and LED holes can be checked that they are open, not blocked, no flashes etc. are present. Sub-assemblies may be provided e.g., by pushing the projector aperture to the illumination projector's 30 core of the waveguide 33 being a tube and/or by heat staking of the mirror 21 to the illumination projector's 30 core of the waveguide 33 being a tube. The connector seal 5 into the housing body 3 to implement the connector plug 6. In all these steps one may ensure that the corners of the components and sub-assemblies are seated correctly. The PCBA 93 (not shown here) may be slid (from the right or from the bottom) into the housing body 3. In a step it may be taken care of that the seating of the connector seal 5 is placed correctly. In a step the illumination projector 30 (projector) and illumination receiving system 39 (receiver) using may be screwed to the housing body using at least one screw each, particularly by using only a single screw each. In a step one may take care of a correct alignment of each of the pins to the PCBA 93. The PCBA 93 may be secured to the housing body 3, particularly by using at least a single screw, particularly by using only a single screw. The housing cover 18 is sunk into a bottom of the housing body and may be secured, particularly with 3 screws.

A preferred method for manufacturing of the projection tube is particularly by (direct) injection molding, particularly without secondary inner surface conditioning processes, like secondary grinding (machining) or coating of the inner surface of the waveguide 33 being a tube. For secure tool release of the inner pin shaping the inner surface and its structure, a draft angle may be provided. Suitable draft angles can range between 1 and 10 degrees. Depending on the cross section of the inner tube and the desired structure the draft angle can range between 3 and 7 degrees. The inclusion of the draft angle can have a minimal influence on the divergence angle of the exit beam and particularly only a minor can have an influence on the intensity of the exit light bundle.

For direct injection molding, the material choice may affect the efficiency of the embodiment. The material can allow for an inherently non-specular and highly reflective (90 % or higher, preferably 99 % or higher) surface finish. The non-specular surface requirement can be influenced by the surface finish of the molding tool and by the properties of the material used (filler properties). A material that is highly reflective and non-directional reduces the requirements to be given for the emitted illumination flux of the light source 32, particularly the LED. A material providing very high reflective properties and being non directional can be is Barium Sulfate (BaSO₄).

Manufacturing of the lighthouse 59 can be performed by direct injection molding (particularly no secondary processes like machining and or coating of the inner surface of the lighthouse 59). The light entrapped by the lighthouse 59 can be integrated by multiple non-specular reflections as described elsewhere herein. The material choice of the lighthouse 59 can affect the efficiency of the embodiment resulting from the method. The material can have an inherently non-specular and highly reflective surface finish. The non-specular surface requirement is influenced by the surface finish of the molding tool and by the properties of the material used (filler properties). A material that is highly reflective and non-directional increases the illumination efficiency. A material providing very high reflective properties and being non directional can be Barium Sulfate (BaSO₄).

Barium Sulfate can be provided as a powder. When sprayed directly to a surface it can easily be rubbed off. Therefore, Barium Sulfate can be added to a coating (for instance latex with 50% weight/weight also in short w/w), improving its rubbing fastness. Providing barium sulfate in a coating can be achieved by submitting the receiving cavity 36 for secondary processing. Secondary processing of the receiving cavity 36 might add undesirable costs during manufacturing.

A lower cost application alternative is provided in that Barium Sulfate pigments can be added to a base plastic compound and by extruding this mixture. The resulting granulate can be used for injection molding in method steps described elsewhere herein. Precipitated Barium Sulfate may be used as a delivery component. Depending on the other properties the receiving cavity 36 can be provided with, the filler can be mixed with the base material of choice, like i.e., PA or ABS. Moreover, Barium Sulfate as a filler can add further properties to the base material. It may improve processability, hardness, and chemical resistance. As an alternative to Barium Sulfate, Titanium Dioxide (TiOz) can be used as a highly reflective filler for a plastic compound.

Opposite to the beneficial highly reflective properties of the lighthouse 59, for a thick aperture as well as for the interconnection tube 58 between the holder 80 of the lens with thin aperture (the thin aperture with lens assembly 53) and lighthouse 59, a material can be selected that has highly absorptive properties. A material with a high carbon content can be highly absorptive over a wide wavelength range. Moreover, when used as a filler in a plastic compound, it may render this compound conductive. As such, adding carbon as a filler to the material choice for the aperture may reduce environmental and stray light sensitivity and may also improve EMV and ESD susceptibility.

In particular, the term "may" refers to optional features of the invention. Consequently, there are also further aspects and/or embodiments of the invention which additionally or alternatively have the respective feature or features. All features in feature combinations are also disclosed independently thereof and may also be singled out from the combinations of features disclosed herein and used in combination with other features to specify the subject-matter of the any of the claims, dissolving any structural and/or functional relationship that may exist between the features. Terms like "first", "second", "third" may be used to refer to a list of elements, but does not necessarily describe these features or elements according to their importance, their order of appearance or importance. Therefore, these elements or features may specify the different aspects in any other particular order, unless explicitly expressed.

**List of reference signs**

| | | | |
|---|---|---|---|
| 1 | air venting hole | 31 | mirror housing |
| 2 | eyelet | 32 | light source as LED |
| 3 | housing body | 33 | waveguide as light homologation tube |
| 4 | mounting element | | |
| 5 | connector sealing | 33a | short light homologation tube |
| 6 | connector plug | 33b | long light homologation tube |
| 7 | seal dome | 34 | yarn |
| 8 | button | 35 | aperture |
| 9 | measurement gap | 36 | receiving cavity as integrating tube |
| 10 | yarn clearer | 37 | photosensitive electronical component as detector |
| 11 | yarn guiding device as yarn guide | | |
| 12 | yarn exit guide | 37a | small detector |
| 13 | connector pins | 37b | big detector |
| 14 | contact surface for window carrier on housing body | 38 | diffusor |
| | | 39 | illumination receiving system on receiving side |
| 15 | screw holes | | |
| 16 | alignment structures | | |
| 17 | window carrier | 41 | mounting ring |
| 18 | housing cover | 42 | aperture opening |
| 19 | window on receiving side as second | | |
| | window to be passed by the light | 50 | optical setup |
| | | 51 | aperture diameter |
| 21 | mirror | 52 | focal distance |
| 22 | heat stacks | 53 | thin aperture with lens assembly |
| 23 | engagement pin | 54 | measurement gap width |
| 24 | spacers | 55 | center of illumination projector object |
| 25 | recess | 56 | illumination projector object |
| 26 | tube | 57 | entrance to lighthouse |
| 27 | ribs | 58 | interconnecting tube |
| | | 59 | lighthouse |
| 30 | illumination projector on an emission side | 60 | secondary focus point |
| 69 | side wall | 85 | beam exit |
| 70 | light guide | 86 | lighthouse aperture |
| 71 | light guide shaft | 87 | alignment pin |
| 72 | basis | 88 | beam entrance |
| 73 | stopper | 89 | window on emission side (schematic representation) as first window to be passed by light |
| 74 | hollow core for light guide | | |
| 75 | spring part | | |
| 76 | seal basis | 90 | first wall of double meandering sealing |
| 77 | seam | | |
| 78 | pocket | 91 | valley of double meandering sealing |
| 79 | double meandering sealing | 92 | second wall of double meandering sealing |
| 83 | orthogonal locking and sealing features | 93 | PCBA |

## Claims

1. Illumination receiving system (39) for receiving a shadow projection from on object, particularly at least one of a string-like textile formation, a yarn (34), a sliver, a rover or a singular item, particularly placed inside a measurement gap (9) of a sensor, or a light reflected from an object, particularly at least one of a string-like textile formation, a yarn (34), a sliver, a rover or a singular item, particularly placed inside a measurement gap (9) of a sensor, in a textile machine, **characterized in that** the illumination receiving system (39) comprises:
- at least one receiving cavity (36); and
- at least one photosensitive electronical component (37);
wherein the receiving cavity (36) is configured and placed relative to the object such that light emitted from a light source (32) and projecting a shadow from the object and/or being reflected from the object to enter the receiving cavity (36) and wherein the light entering the receiving cavity (36) is transmitted to the at least one photosensitive electronical component (37) for measuring the incoming illumination.

2. Illumination receiving system (39) according to claim 1, **characterized in that** the photosensitive electronical component (37) is mounted in position such that the photosensitive electronical component (37) is out of line-of-sight of the incoming light projecting a shadow from the object and/or being reflected from the object into the receiving cavity (36).

3. Illumination receiving system (39) according to either of the claims 1 or 2, **characterized in that** an aperture (35) is placed at the entrance of the receiving cavity (36) and/or wherein the receiving cavity (36) is a lighthouse (59).

4. Illumination receiving system (39) according to claim 3, **characterized in that** the aperture (35) is a thick aperture.

5. Illumination receiving system (39) according to any of the preceding claims, **characterized in that** at least the width of an aperture opening (42) is set to a range of a minimum length of the defect size that is to be measured or wherein at least the height of the aperture opening (42) is set to a range of a maximum defect size that is to be measured.

6. Illumination receiving system (39) according to any of the preceding claims, **characterized in that** opposite walls of the receiving cavity (36) are at least one chosen from
- diffused,
- non-specular,
- shaped such that they direct light away from the aperture; or
- light absorbing in the wavelength range in which the at least one photosensitive electronical component (37) is sensitive.

7. Illumination receiving system (39) according to any of the preceding claims, **characterized in that** an aperture of the receiving cavity (36) is stray light reducing in the wavelength range in which the at least one photosensitive electronical component (37) is sensitive by at least one of being non-specular, being absorptive or being shaped or being positioned such that it directs light in a direction where potential secondary back-reflections into the aperture of the receiving cavity (36) are minimal or being shaped and/or being positioned such that light impinging on its outer surface is spread in multiple directions for minimizing potential secondary back-reflections into the aperture of the receiving cavity (36).

8. Illumination receiving system (39) according to any of the preceding claims, **characterized in that** a thin aperture (53) with lens assembly is placed in front of the entrance to the receiving cavity (36) in an f-configuration, particularly mounted in an interconnecting tube (58), for a shadow projection, particularly in an f-configuration mounted in an interconnecting tube (58), for a shadow projection and particularly providing a pin-hole at the entrance to the receiving cavity (36).

9. Illumination receiving system (39) according to any of the preceding claims, **characterized in that** a thin aperture (53) with lens assembly is placed in front of the entrance to the receiving cavity in a greater than 2f-configuration, particularly mounted in an interconnecting tube (58), for a reflection arrangement, particularly wherein the aperture opening size of the aperture of the receiving cavity (36) matches the aperture opening (42) size of the thin aperture (53).

10. Illumination receiving system (39) according to any of the preceding claims, **characterized in that** at least one inner surface of the receiving cavity (36) comprises at least one of a non-specular surface finish or a (highly) reflective surface material.

11. Textile machine or clearer comprising an illumination receiving system (39) according to any of the preceding claims.

12. Method of manufacturing an illumination receiving system (39), particularly according to the preceding claims, **characterized by** the steps of
- manufacturing a pre-receiving cavity;
- applying a surface finish;

13. Method according to claim 12, **characterized by** the step of manufacturing of the pre-receiving cavity is in form of (direct) injection molding.

14. Method according to either of the claims 12 or 13, **characterized in that** at least one of an aperture (35), a receiving cavity's (36) part of a wall or an interconnecting tube (58) is coated with and/or is made such that it comprises an absorptive material, particularly comprising a carbon component.

15. Method for measuring defects in a yarn **characterized by** the following steps:
- emitting light from a light source (32) to an object such that the light projects a shadow from the object (34) and/or the light reflects from the object;
- collecting the light with the projected shadow or reflected from the object in a receiving cavity (36); and
- transmitting the light entering the receiving cavity (36) to at least one photosensitive electronical component (37) such that the incoming illumination is to be measured.
